# EUROPÄISCHE PATENTSCHRIFT

(11) **EP 0 296 391 B1**
(45) Veröffentlichungstag und Bekanntmachung des Hinweises auf die Patenterteilung: **07.07.1993**
(21) Anmeldenummer: 88108800.9
(22) Anmeldetag: 01.06.1988
(51) Int. Cl.: C08F 291/00, C08F 2/44

(54) **Lichtstabilisierte, epoxygruppenhaltige Polymermikropartikel**
Light-stabilized polymer microparticles containing epoxy groups
Microparticules de polymères contenant des groupes époxydes résistant à la lumière

(30) Priorität: 04.06.1987 CH 2113/87
(43) Veröffentlichungstag der Anmeldung: 28.12.1988
(73) Patentinhaber: CIBA-GEIGY AG, 4002 Basel (CH)
(72) Erfinder: Rody, Jean, Dr., CH-4125 Riehen (CH); Slongo, Mario, Dr., CH-1712 Tafers (CH); Sitek, Franciszek, Dr., CH-4106 Therwil (CH); Valet, Andreas, Dr., D-7859 Eimeldingen (DE)
(74) Vertreter: Zumstein, Fritz, Dr.

(56) Entgegenhaltungen:
- EP-A- 0 226 538
- DE-A- 2 748 362
- GB-A- 2 105 731
- GB-A- 2 145 100
- GB-A- 2 174 996
- US-A- 4 308 362

## Beschreibung

Die Erfindung betrifft lichtstabilisierte epoxygruppenhaltige Polymermikropartikel, Verfahren zu deren Herstellung, diese enthaltende Dispersionen sowie Beschichtungszusammensetzungen, die diese enthalten.

In der Beschichtungstechnik besteht in neuerer Zeit, bedingt durch das Erfordernis einer möglichst geringen Umweltbelastung, ein besonderes Interesse an der Erhöhung des Anteils des in den Beschichtungszusammensetzungen anwesenden filmbildenden Materials und an der Reduktion des Anteils an inerten flüssigen Verdünnungsmitteln, die während der Lackherstellung und der Trocknung und Härtung abgedampft werden müssen.

Beschichtungszusammensetzungen mit einem hohen Anteil an filmbildendem Material sind z.B. aus der EP-A 3166 und der EP-A 119 051 sowie der jeweils darin zitierten Literatur bekannt; sie sind im allgemeinen aus einer flüssigen kontinuierlichen Phase und einer dispersen Phase, die einen gegebenenfalls hohen Anteil an unlöslichen Polymermikroteilchen enthält, aufgebaut.

Die resultierenden Filme und Beschichtungen besitzen einen zusammengesetzten Charakter, nämlich eine Polymermatrix oder eine kontinuierliche Phase, die sich von ursprünglich in Lösung befindlichem Polymer ableitet, und eine disperse Phase, die sich von den Polymermikroteilchen ableitet.

Bekannte Mikropartikel enthaltende Beschichtungszusammensetzungen weisen jedoch eine nur ungenügende Lichtstabilität auf, da bisher nur das Lackgemisch als solches durch physikalische Zumischung eines Lichtschutzmittels in der homogenen flüssigen Phase stabilisiert wird.

Der gegebenenfalls hohe Mikropartikelanteil solcher Beschichtungen ist dagegen unstabilisiert.

Es wurde nun gefunden, dass sich die Lichtstabilität von Beschichtungen und Lacken, insbesondere Einbrennlacken, mit einem Anteil an Mikropartikeln verbessern lässt, wenn man entsprechende Lichtschutzmittel in die Mikropartikel inkorporiert und diese damit direkt vor Witterungseinflüssen, insbesondere Bestrahlung, schützt.

Die Erfindung betrifft daher lichtstabilisierte Polymermikropartikel mit einem vernetzten Kern und einer Teilchengrössenverteilung von 0,01-20 µm, erhältich durch Copolymerisation von
a) einer oder mehreren ethylenisch ungesättigten monomeren Verbindungen oder/und einem oder mehreren verschiedenen Monomeren aus der Gruppe der Polyalkohole, Polycarbonsäuren, Hydroxycarbonsäuren, Lactone, Aminocarbonsäuren, Aminoalkohole und Polyamine und
b) mindestens einer Epoxid-Verbindung, die mindestens eine weitere reaktive Gruppe enthält, wobei im wesentlichen nur letztere an der Copolymerisation teilnimmt, wodurch die erhaltenen Mikropartikel freie Epoxygruppen enthalten,
welche Mikropartikel 0,1-bis 30 Gew-%, bezogen auf die eingesetzten Monomeren, eines oder mehrerer Lichtschutzmittel(s) enthalten, und wobei mindestens ein Teil der Polymerisation der Monomeren in Gegenwart des (der) Lichtschutzmittel(s) erfolgt.

Unter Mikropartikel sollen hierbei Polymerteilchen mit einer Grösse oder Grössenverteilung in den genannten kolloidalen Dimensionen verstanden werden, die in der kontinuierlichen flüssigen Phase von Beschichtungszusammensetzungen unlöslich sind. Der Ausdruck Polymermikropartikel ist in der Lacktechnik und damit in der einschlägigen Literatur wohlbekannt.

Ein wesentliches Merkmal der Mikropartikel neben ihrer Grösse ist, dass sie einen vernetzten Kern enthalten bzw. aus diesem bestehen. Die Mikropartikel weisen in der Idealform eine annähernd kugelförmige Gestalt auf. In der Literatur ist an Stelle des Ausdrucks "Mikropartikel" auch der Ausdruck "Mikrogel" gebräuchlich. Daher können die erfindungsgemässen Mikropartikel auch als lichtstabilisierte Polymermikrogele bezeichnet werden.

In der prioritätsälteren EP-A 226 538 sind lichtstabilisierte Polymermikropartikel beschrieben, die allerdings keine freien Epoxigruppen aufweisen.

Die erfindungsgemässen Mikropartikel entstehen durch Copolymerisation der beiden Komponenten a) und b), wobei die Komponente a) ein einheitliches Monomeres sein kann, vorzugsweise aber aus mehreren Monomeren besteht, um eine bessere Vernetzung zu erzielen. Vor Zugabe der Epoxidkomponente b), die gegebenenfalls auch eine Mischung von mehreren verschiedenen Epoxiden sein kann, können die Monomeren a) bereits vorpolymerisiert sein. Solche Polymere müssen jedoch reaktive Gruppen enthalten, um die Copolymerisation mit dem Epoxid zu gewährleisten.

Die Polymerisation muss so gelenkt werden, dass im fertigen Mikropartikel freie Epoxygruppen vorhanden sind. Dies wird dadurch erreicht, dass der Polymerisationsschritt mit dem Epoxid im wesentlichen nur die zusätzliche reaktive Gruppe betrifft, beispielsweise durch Polyaddition eines eine ethylenisch ungesättigte Gruppe enthaltenden Epoxids an eine ethylenisch ungesättigte Gruppe eines oder mehrerer Monomeren gemäss a) oder deren Polymerisationsprodukte, die noch ethylenisch ungesättigte Gruppen enthalten.

Die Mikropartikel können gegebenenfalls mit einem Weichmacher weichgemacht sein.

Als ethylenisch ungesättigte Monomere gemäss Komponente a) kommen beispielsweise in Betracht: Ethen, Propen, Buten, Isopren, Butadien, Acrylsäure und Methacrylsäure, deren Ester wie z.B. Methylmethacrylat, Butylmethacrylat, Ethylacrylat, Butylacrylat, 2-Ethylhexylacrylat, Vinylether, Vinylester wie z.B. Vinylacetat, die Vinylester von "Versatic Acid"®, Vinylhalogenide wie beispielsweise Vinylchlorid, Vinylidenchlorid, Vinylaromaten wie Styrol, Vinyltoluol, tert.-Butylstyrol oder α,β-ungesättigte Nitrile wie Acrylnitril oder Methacrylnitril. Bevorzugt sind Polymere aus Acryl- und Methacrylsäureestern und deren Copolymere.

Zur besseren Vernetzung der Mikropartikel auf Basis solcher Monomeren kann man dem Monomerengemisch eine gewisse Menge an Monomeren zusetzen, welche zusätzlich zu den ungesättigten, polymerisierbaren Gruppierungen komplementär reaktive Gruppen enthalten, z.B. Glycidylmethacrylat oder Methacrylsäure. Geeignete komplementär reaktive Gruppen werden in der GB-PS 1,156,012 beschrieben, wo sich auch Hinweise über die zu verwendenden Monomeren und ein Verfahren zur Herstellung von vernetzten Additionspolymermikroteilchen finden. Die nach der GB-PS 1,156,012 hergestellten Mikropartikel enthalten Gruppen, die bei der Herstellung nicht co-reagiert haben, jedoch z.B. durch nachträgliches Erhitzen zu einer Co-reaktion veranlasst werden können und dabei Vernetzungen bilden. Es ist in diesem Zusammenhang klarzustellen, dass es sich bei Verwendung z.B. von Glycidylmethacrylat als Vernetzer nicht um ein Epoxid im Sinne der Komponente b) handelt, da bei dessen Verwendung sowohl die Epoxygruppe als auch die Doppelbindung reagiert (Vernetzung) und keine freie Epoxygruppe erhalten bleibt.

Eine andere Möglichkeit, die Vernetzung zu fördern, besteht darin, den der Polymerisation unterliegenden Monomeren einen kleinen Anteil von Monomeren einzuverleiben, die in Bezug auf die Polymerisationsreaktion bifunktionell sind, wie z.B. Ethylenglycoldimethacrylat oder Divinylbenzol. Weitere Beispiele für geeignete bifunktionelle Monomeren werden z.B. in der US-A 4,290,932 genannt.

Es ist ein Merkmal der erfindungsgemässen Polymermikroteilchen, dass sie als Bestandteil von Beschichtungszusammensetzungen mittels der freien Epoxygruppen an deren Härtung teilnehmen können. Die Mikropartikel können gegebenenfalls noch weitere freie reaktive Gruppen enthalten, z.B. Hydroxy- oder Carboxylgruppen. Diese können von Monomeren der Komponente a) stammen, z.B. von Hydroxyalkylacrylaten oder -methacrylaten wie Hydroxyethylacrylat, Hydroxyisopropylmethacrylat oder ungesättigten Carbonsäuren wie Acrylsäure oder Methacrylsäure.

Als Monomere gemäss Komponente a), die zur Kondensationspolymerisation befähigt sind, kommen z.B. solche in Frage, die für die Herstellung von Polymeren durch Schmelz- oder Lösungspolymerisationstechniken allgemein bekannt sind. Beispiele für geeignete Materialien, die Polyester ergeben, sind mehrwertige Alkohole, wie z.B. Ethylenglycol, Propylenglycol, Butylenglycol, 1,6-Hexylenglycol, Neopentylglycol, Diethylenglycol, Triethylenglycol, Tetraethylenglycol, Glycerin, Trimethylolpropan, Trimethylolethan, Pentaerythrit, Dipentaerythrit, Tripentaerythrit, Hexantriol, Oligomere von Styrol und Allylalkohol (wie z.B. das unter der Bezeichnung RJ 100 von der Monsanto Chemical Co. vertriebene Material) und die Kondensationsprodukte von Trimethylolpropan mit Ethylenoxid oder Propylenoxid (wie z.B. die im Handel als "Niax"-Triole bekannten Produkte) gemeinsam mit Polycarbonsäuren, wie z.B. Bernsteinsäure oder deren Anhydrid, Adipinsäure, Azelainsäure, Sebacinsäure, Maleinsäure oder deren Anhydrid, Fumarsäure, Muconsäure, Itaconsäure, Phthalsäure oder deren Anhydrid, Isophthalsäure, Terephthalsäure, Trimellitsäureanhydrid, Pyromellitsäure oder deren Anhydrid, Truxinsäure und Truxilsäure. Im Falle von Polyamiden sind geeignete monomere Ausgangsmaterialien Aminocarbonsäuren, wie. z.B. 6-Aminocapronsäure oder 11-Aminoundecylsäure, oder die entsprechenden Lactame, und/oder Polyamine, wie z.B. Ethylendiamin, Propylendiamin, Hexamethylendiamin, Diethylentriamin, Triethylentetramin oder Tris-(aminomethyl)-methan gemeinsam mit den oben erwähnten Polycarbonsäuren.

Die Vernetzung bei der Polykondensation wird, wie schon für die Additionspolymermikroteilchen beschrieben, z.B. dadurch erreicht, dass man dem zu polymerisierenden Gemisch einen Anteil eines oder mehrerer Ausgangsmonomeren zusetzt, die eine grössere Funktionalität als 2 aufweisen.

Bevorzugt als Monomere a) sind solche aus der Gruppe der Polyalkohole, Polycarbonsäuren, Hydroxycarbonsäuren und Lactone (hier insbesondere die Polyester ergebenden Monomeren) sowie insbesondere die ethylenisch ungesättigten monomeren Verbindungen.

Werden zusätzliche reaktive Gruppen benötigt, so führt man in die Monomerenmischung geeignete Monomeren mit einer Funktionalität grösser als 2 ein, die unter den Bedingungen der Teilchenherstellung maximal verzweigen, nicht jedoch vernetzen können.

Die Epoxid-Komponente b) muss neben mindestens einer Epoxygruppe mindestens eine weitere reaktive Gruppe aufweisen. Derartige weitere reaktive Gruppen können z.B. ethylenische Doppelbindungen, Carboxy-, Ester-, Nitril-, Amid- oder Hydroxygruppen sein. Bevorzugt sind Carboxylgruppen, Estergruppen und ethylenische Doppelbindungen, insbesondere letztere.

Beispiele für besonders bevorzugt einsetzbare Epoxid-Verbindungen sind:

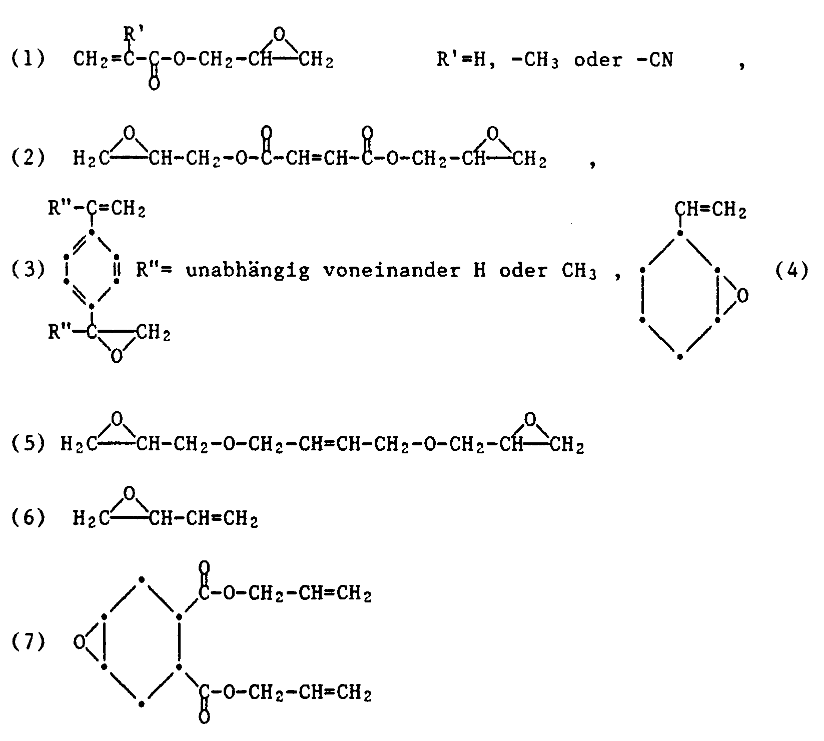

Besonders hervorzuheben sind dabei die Verbindungen der Formel (1).

Die erfindungsgemässen Polymermikropartikel können z.B. nur aus dem vernetzten Polymerkern bestehen, der dann das Lichtschutzmittel enthält. Häufig bilden sie aber dann keine stabilen Dispersionen aus (die Teilchen setzen sich ab), oder die Dispersion muss durch Dispergatoren zusätzlich stabilisiert werden. Ferner ist die Verteilung in der flüssigen kontinuierlichen Phase der Lackzusammensetzung, in der die Mikropartikel eingesetzt werden können, nicht ideal. Daher ist es besonders bevorzugt, die Mikropartikel so zu modifizieren, dass stabile Dispersionen in vielen Dispersionsmitteln sowie gute Verteilung in der flüssigen kontinuierlichen Phase von Lackzusammensetzungen gewährleistet sind. Eine bevorzugte Modifikation besteht darin, an den eigentlichen Mikropartikelkern im wesentlichen lineare oder wenig verzweigte Polymerketten anzubringen, z.B. durch Anpolymerisieren oder Ankondensieren (Graften). Diese linearen Polymeren enthalten funktionelle Gruppen, die ein solches Verhältnis an hydrophilen und hydrophoben Funktionen aufweisen, dass die Dispergierbarkeit des resultierenden Gesamtmikropartikels erhöht und damit eine stabile Dispersion sichergestellt wird. Die zum Aufgraften auf den Polymermikropartikelkern geeigneten linearen bzw. leicht verzweigten Polymeren werden im folgenden auch als "amphipathische" Dispersionsmittel bezeichnet. Selbstverständlich kann die Dispergierbarkeit in bestimmten Lösungsmitteln auch auf andere Weise sichergestellt werden, z.B. durch Einführen von geeigneten Kombinationen ionischer Gruppen. Wie später noch ausgeführt wird, können die freien Epoxygruppen dann im Kern, im amphipathischen Dispersionsmittel, oder in beiden Teilen vorhanden sein.

Erfindungsgemässe Polymermikropartikel, die ein amphipathisches Dispersionsmittel enthalten, können das (die) Lichtschutzmittel im Kern, im amphipathischen Dispersionsmittel, oder in beiden enthalten. Dabei können im Kern und im amphipathischen Dispersionsmittel jeweils verschiedene Lichtschutzmittel enthalten sein. Das Lichtschutzmittel wird in das amphipathische Dispersionsmittel auf die gleiche Weise inkorporiert wie in den Kern, nämlich dadurch, dass die Herstellung desselben (Polymerisation) in Gegenwart des Lichtschutzmittels erfolgt.

Prinzipiell kann (können) das (die) Lichtschutzmittel im Polymermikropartikel chemisch verankert (das Lichtschutzmittel nimmt an der Polymerisation teil), oder lediglich physikalisch eingeschlossen sein. Beide Fälle führen zu der erwünschten Lichtstabilisation, der chemische Einbau ist jedoch bevorzugt.

Für die Lichtstabilisierung der Mikropartikel kommen Vertreter praktisch aller bekannten Klassen von Lichtschutzmitteln, z.B. sterisch gehinderte Amine, 2-(2-Hydroxyphenyl)benztriazole, Oxalsäureanilide, 2-Hydroxybenzophenone, Hydroxyphenyltriazine oder Zimtsäurederivate, in Frage. Als Lichtschutzmittel bevorzugt sind hierbei 2-(2-Hydroxyphenyl)benztriazole und insbesondere sterisch gehinderte Amine.

Gehört das Lichtschutzmittel der Klasse der sterisch gehinderten Amine an, so handelt es sich vorzugsweise um cyclische Amine, insbesondere um Derivate von 5-, 6- oder 7-gliedrigen heterocyclischen Ringsystemen mit 1 oder 2 N-Atomen, die in beiden Ortho-Positionen zum N-Atom tertiäre C-Atome besitzen, wodurch eine sterische Hinderung des N-Atoms bewirkt wird.

Beispiele für solche Ringsysteme sind die 2,2,5,5-tetrasubstituierten Pyrrolidine, Imidazolidone oder Oxazoline der Formeln 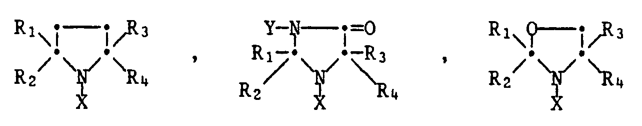
oder die 2,2,6,6-tetrasubstituierten Piperazinone und Piperazindione der Formeln 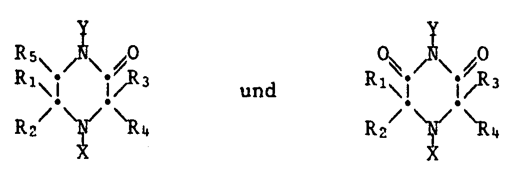
oder die Diazacycloheptanone der Formel 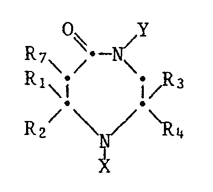
worin R₁, R₂, R₃ und R₄ gegebenenfalls zu Spiroringen vereinigte aliphatische Kohlenwasserstoffreste, R₅ und R₇ Wasserstoff oder Alkyl und X Wasserstoff, Oxyl-Sauerstoff, OH oder einen einwertigen organischen Rest und Y Wasserstoff, einen einwertigen oder zweiwertigen organischen Rest bedeuten. Ein Beispiel für solche Verbindungen ist jene der Formel 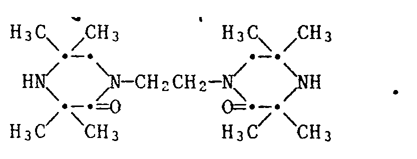
Auch in 2-Stellung disubstituierte Decahydrochinoline sind Repräsentanten der sterisch gehinderten Amine.

Von besonderer Bedeutung unter den Verbindungen der sterisch gehinderten Amine sind die 2,2,6,6-Tetraalkylpiperidinderivate. Es handelt sich dabei um Verbindungen, die in ihrem Molekül mindestens eine Gruppe der Formel 1 enthalten, 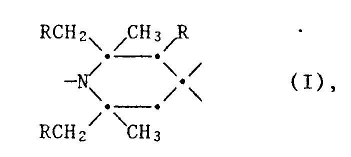
worin R Wasserstoff oder Methyl bedeutet. Das Lichtschutzmittel kann eine oder mehrere solcher Gruppen der Formel I enthalten, beispielsweise kann es sich um eine Mono-, Bis-, Tris-, Tetra- oder Oligo-piperidinverbindung handeln. Bevorzugt sind Piperidinderivate, die eine oder mehrere Gruppen der Formel I enthalten, worin R Wasserstoff ist, sowie solche, deren Ringstickstoff kein Wasserstoffatom trägt.

Die meisten dieser Piperidin-Lichtschutzmittel tragen polare Substituenten in der 4-Stellung des Piperidinringes oder tragen einen Spiroring in dieser Stellung.

Von Bedeutung sind insbesondere die folgenden Klassen von Piperidinverbindungen.
a) Verbindungen der Formel II 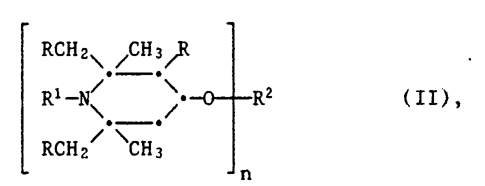 worin n eine Zahl von 1 bis 4, vorzugsweise 1 oder 2 bedeutet, R Wasserstoff oder Methyl bedeutet, R¹ Wasserstoff, Oxyl, Hydroxy, C₁-C₁₈-Alkyl, C₃-C₈-Alkenyl, C₃-C₈-Alkinyl, C₁-C₁₈-Alkoxy, C₅-C₁₂-Cycloalkoxy, C₃-C₁₈-Alkenyloxy, C₇-C₁₂-Aralkyl, C₂-C₈-Alkanoyl, C₃-C₅-Alkenoyl, Glycidyl oder eine Gruppe -CH₂CH(OH)-Z, worin Z Wasserstoff, Methyl oder Phenyl ist, bedeutet, wobei R¹ vorzugsweise C₁-C₁₂-Alkyl, Allyl, Benzyl, Acetyl oder Acryloyl ist und R², wenn n 1 ist, Wasserstoff, gegebenenfalls durch ein oder mehrere Sauer-stoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, C₁-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen (gesättigten oder ungesättigten) Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Docecyl dar.

In der Bedeutung von C₁-C₁₈-Alkyl können R¹ oder R² z.B. die oben angeführten Gruppen und dazu noch beispielsweise n-Tridecyl, n-Tetradecyl, n-Hexadecyl oder n-Octadecyl darstellen. Als Beispeile für C₁-C₁₈ Alkoxy sind die sich von den vorstehenden Alkylgruppen ableitenden Alkoxygruppen zu erwähnen.

Wenn R¹ C₃-C₈-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

R¹ ist als C₃-C₈-Alkinyl bevorzugt Propargyl. Cycloalkyl(oxy) ist bevorzugt C₅-C₇-Cycloalkyl(oxy), insbesondere Cyclohexyl(oxy).

Als C₇-C₁₂-Aralkyl ist R¹ insbesondere Phenethyl oder vor allem Benzyl.

R¹ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.

Bedeutet R² einen einwertigen Rest einer Carbonsäure, so stellt es beispielsweise einen Essigsäure-, Capronsäure-, Stearinsäure-, Acrylsäure-, Methacrylsäure, Benzoe- oder β-(3,5-Di-tert.-butyl-4-hydroxyphenyl)-propionsäurerest dar.

Bedeutet R² einen zweiwertigen Rest einer Dicarbonsäure, so stellt es beispielsweise einen Malonsäure- Adipinsäure-, Korksäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt R² einen dreiwertigen Rest einer Tricarbonsäure dar, so bedeutet es z.B. einen Trimellitsäure- oder einen Nitrilotriessigsäurerest.

Stellt R² einen vierwertigen Rest einer Tetracarbonsäure dar, so bedeutet es z.B. den vierwertigen Rest von Butan-1,2,3,4-tetracarbonsäure oder von Pyromellitsäure.

Bedeutet R² einen zweiwertigen Rest einer Dicarbaminsäure, so stellt es beispielsweise einen Hexamethylendicarbaminsäure- oder einen 2,4-Toluylen-dicarbaminsäurerest dar.

Besonders zu erwähnen sind dabei Verbindungen der Formel II, worin n 1 oder 2, R Wasserstoff, R¹ Wasserstoff, Oxyl, Hydroxy, C₁-C₆-Alkyl, C₁-C₁₂-Alkoxy, Cyclohexyloxy, C₃-C₈-Alkenyl, z.B. Allyl, Benzyl, C₂-C₆-Alkanoyl, C₃-C₅-Alkenoyl, z.B. Acryloyl oder Methacryloyl, Glycidyl oder -CH₂CH(OH)-Z₁, worin Z₁ Wasserstoff oder Methyl ist, und R₂, wenn n 1 ist, Wasserstoff, C₁-C₁₂-Alkyl, Benzyl oder den Rest einer aliphatischen Carbonsäure mit 2-18 C-Atomen, einer α,β-ungesättigten Carbonsäure mit 3-5 C-Atomen oder einer aromatischen Carbonsäure mit 7-15 C-Atomen, und wenn n 2 ist, C₁-C₆-Alkylen, C₄-C₈-Alkenylen oder den Rest einer aliphatischen gesättigten oder ungesättigten Dicarbonsäure mit 2-18 C-Atomen bedeuten.

Bevorzugt sind vor allem solche Verbindungen der Formel II, worin R¹ oder/und R² mindestens eine ethylenische Doppelbindung enthält, z.B. solche, worin R₁ C₃-C₈-Alkenyl, C₃-C₅-Alkenoyl, C₃-C₈-Alkenyloxy, insbesondere C₃-C₅-Alkenoyl ist und R² die oben angegebenen und bevorzugten Bedeutungen hat sowie z.B. solche, in denen R² (für n=1) einen einwertigen Rest einer ungesättigten Carbonsäure (z.B. mit 3-5 C-Atomen, α,β-ungesättigt) oder (für n=2) C₄-C₁₂-alkenylen oder den Rest einer ungesättigten Dicarbonsäure bedeutet und R¹ die oben angegebenen und bevorzugten Bedeutungen hat; sowie solche, in denen R¹ und R² jeweils derartige ethylenisch ungesättigte Rest sind.

Beispiele für Tetraalkylpiperidin-Verbindungen dieser Klasse sind folgende Verbindungen:
1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-adipat
11) Di-(2,2,6,6-tetramethylpiperidin-4-yl)-sebacat
12) Di-(1,2,3,6-tetramethyl-2,6-diethyl-piperidin-4-yl)-sebacat
13) Di-(1-allyl-2,2,6,6-tetramethylpiperidin-4-yl)-phthalat
14) 1-Propargyl-4-β-cyanoethyloxy-2,2,6,6-tetramethylpiperidin
15) 1-Acetyl-2,2,6,6-tetramethylpiperidin-4-yl-acetat
16) Trimellithsäure-tri-(2,2,6,6-tetramethylpiperidin-4-yl)-ester
17) 1-Acryloyl-4-benzyloxy-2,2,6,6-tetramethylpiperidin
18) Dibutyl-malonsäure-di-(1,2,2,6,6-pentamethylpiperidin-4-yl)-ester
19) Butyl-(3,5-di-tert.-butyl-4-hydroxybenzyl)-malonsäure-di-(1,2,2,6,6-pentamethylpiperidin-4-yl)-ester
20) Dibenzyl-malonsäure-di-(1,2,2,6,6-pentamethylpiperidin-4-yl)-ester
21) Dibenzyl-malonsäure-di-(1,2,3,6-tetramethyl-2,6-diethyl-piperidin-4-yl)ester
22) Hexan-1′,6′-bis-(4-carbamoyloxy-1-n-butyl-2,2,6,6-tetramethyl-piperidin)
23) Toluol-2′,4′-bis-(4-carbamoyloxy-1-n-propyl-2,2,6,6-tetramethylpiperidin
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-(1-propyl-2,2,6,6-tetramethylpiperidin-4-yl)-phosphit
27) Tris-(1-propyl-2,2,6,6-tetramethylpiperidin-4-yl)phosphat
28) Phenyl-[bis-(1,2,2,6,6-pentamethylpiperidin-4-yl)]-phosphonat
29) Di-(1,2,2,6,6-pentamethylpiperidin-4-yl)-sebacat
29a) 4-Hydroxy-1,2,2,6,6-pentamethylpiperidin
29b) 4-Hydroxy-N-hydroxyethyl-2,2,6,6-tetramethylpiperidin
29c) 4-Hydroxy-N-(2-hydroxypropyl)-2,2,6,6-tetramethylpiperidin
29d) 1-Glycidyl-4-hydroxy-2,2,6,6-tetramethylpiperidin
29e) 4-Acryloyloxy-1,2,2,6,6-pentamethylpiperidin

b) Verbindungen der Formel (III) 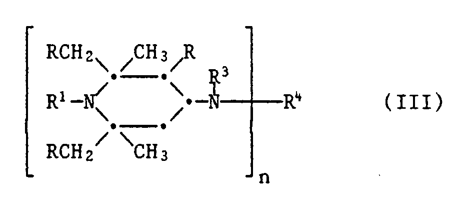 worin n die Zahl 1 oder 2 bedeutet, R und R¹ die unter a) angegebenen Bedeutungen und bevorzugten Bedeutungen haben, R³ Wasserstoff, C₁-C₁₂-Alkyl, C₂-C₅-Hydroxyalkyl, C₅-C₇-Cycloalkyl, C₇-C₈-Aralkyl, C₂-C₁₈-Alkanoyl, C₃-C₁₈-Alkenoyl oder Benzoyl ist und R⁴, wenn n 1 ist, Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O-CH₂- CH(OH)-CH₂- bedeutet, worin D C₂-C₁₀-Alkylen, C₆-C₁₅-Arylen, C₆-C₁₂-Cycloalkylen ist, oder vorausgesetzt, dass R³ nicht Alkanoyl, Alkenoyl oder Benzoyl bedeutet, R⁴ auch einen zweiwertigen Rest einer (gesättigten oder ungesättigten) aliphatischen, cycloaliphatischen oder aromatischen Dicarbonsäure oder Dicarbaminsäure oder auch die Gruppe -CO- bedeuten kann, oder R³ und R⁴ zusammen, wenn n 1 ist, den zweiwertigen Rest einer (gesättigten oder ungesättigten) aliphatischen, cycloaliphatischen oder aromatischen 1,2-oder 1,3-Dicarbonsäure bedeuten können.

Stellen etwaige Substituenten C₁-C₁₂- oder C₁-C₁₈-Alkyl dar, so haben sie die bereits unter a) angegebene Bedeutung.

Bedeuten etwaige Substituenten C₅-C₇ Cycloalkyl, so stellen sie insbesondere Cyclohexyl dar.

Als C₇-C₈ Aralkyl ist R³ insbesondere Phenylethyl oder vor allem Benzyl. Als C₂-C₅Hydroxyalkyl ist R³ insbesondere 2-Hydroxyethyl oder 2-Hydroxypropyl.

R³ ist als C₂-C₁₈ Alkanoyl beispielsweise Propionyl, Butyryl, Octanoyl, Dodecanoyl, Hexadecanoyl, Octadecanoyl, aber bevorzugt Acetyl und als C₃-C₅ Alkenoyl insbesondere Acryloyl.

Bedeutet R⁴ C₂-C₈ Alkenyl, dann handelt es sich z.B. um Allyl, Methallyl, 2-Butenyl, 2-Pentenyl, 2-Hexenyl oder 2-Octenyl.

R⁴ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten C₂-C₁₂ Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten C₆-C₁₅-Arylen, so stellen sie z.B. o-, m-oder p-Phenylen, 1,4-Naphthylen, 4,4′-Diphenylen oder 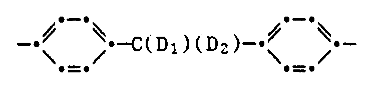
dar, worin D₁ und D₂ unabhängig voneinander Wasserstoff oder Methyl sind.

Als C₆-C₁₂ Cycloalkylen ist D insbesondere Cyclohexylen.

Zu erwähnen sind insbesondere solche Verbindungen der Formel III, worin R und R¹ die unter a) angegebenen bevorzugten Bedeutungen haben, R³ Wasserstoff oder C₁-C₆-Alkyl und R⁴, wenn n 1 ist, Wasserstoff, C₁-C₁₂-Alkyl, C₃-C₈-Alkenyl, mit Hydroxy, Cyano oder Carbamido substituiertes C₁-C₄-Alkyl, CH₂CH(OH)-Z, CONH-Z; und wenn n 2 ist, R⁴ die unter Formel III angegebenen Bedeutungen hat, mit Ausnahme der gemeinsamen Bedeutung R³+R⁴.

Für Verbindungen der Formel III gelten sinngemäss die gleichen Bevorzugungen hinsichtlich der Substituenten mit ethylenischen Doppelbindungen wie für die Verbindungen der Formel II. R³ ist dabei vorzugsweise Wasserstoff oder C₁-C₁₂-Alkyl und R⁴ hat die gleichen bevorzugten Bedeutungen wie R² in Formel II.

Beispiele für Tetraalkylpiperidin-Verbindungen dieser Klasse sind folgende Verbindungen:
30) N,N′-Bis-(2,2,6,6-tetramethylpiperidin-4-yl)-hexamethylen-1,6-diamin
31) N,N′-Bis-(2,2,6,6-tetramethylpiperidin-4-yl)-hexamethylen-1,6-diacetamid
32) 1-Acetyl-4-(N-cyclohexylacetamido)-2,2,6,6-tetramethylpiperidin
33) 4-Benzoylamino-2,2,6,6-tetramethylpiperidin
34) N,N′-Bis-(2,2,6,6-tetramethylpiperidin-4-yl)-N,N′-dibutyl-adipamid
35) N,N′-(2,2,6,6-tetramethylpiperidin-4-yl)-N,N′-dicyclohexyl-2-hydroxypropylen-1,3-diamin
36) N,N′-Bis-(2,2,6,6-tetramethylpiperidin-4-yl)-p-xylylen-diamin
37) Die Verbindung der Formel 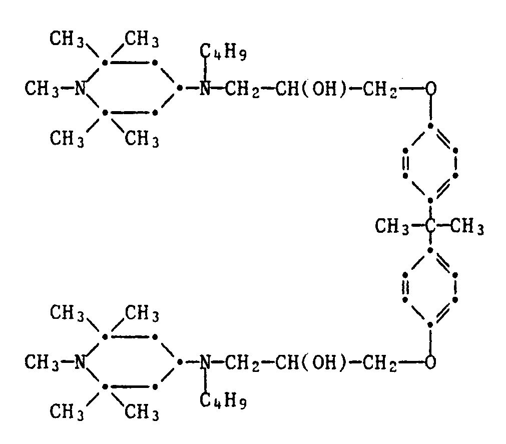
38) 4-(Bis-2-hydroxyethyl-amino)-1,2,2,6,6-pentamethylpiperidin
39) 4-(3-Methyl-4-hydroxy-5-tert.-butyl-benzoesäureamido)-2,2,6,6-tetramethylpiperidin
40) 4-Methacrylamido-1,2,2,6,6-pentamethylpiperidin
40a) 4-Acrylamido-1,2,2,6,6-pentamethylpiperidin

c) Verbindungen der Formel (IV) 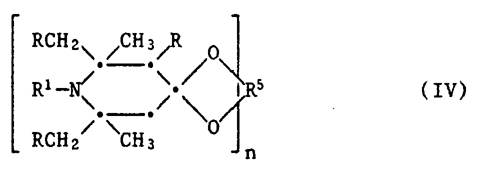 worin n die Zahl 1 oder 2 bedeutet, R und R¹ die unter a) angegebenen Bedeutungen und bevorzugten Bedeutungen haben und R⁵, wenn n 1 ist, C₂-C₈ Alkylen oder Hydroxyalkylen oder C₄-C₂₂ Acyloxyalkylen, wenn n 2 ist, die Gruppe (-CH₂)₂C(CH₂-)₂ bedeutet.

Bedeutet R⁵ C₂-C₈-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Bezüglich des Substituenten R¹ mit ethylenischen Doppelbindungen gelten hier die gleichen Bevorzugungen wie in Formel II.

Als C₄-C₂₂ Acyloxyalkylen bedeutet R⁵ z.B. 2-Ethyl-2-acetoxymethylpropylen.

R⁵ bildet somit im Fall n = 2 die Ergänzung zu einem Spiro-6-Ring und im Fall n = 1 vorzugsweise die Ergänzung zu einem Spiro-5- oder 6-Ring.

Beispiele für Tetraalkylpiperidin-Verbindungen dieser Klasse sind folgende Verbindungen:
41) 9-Aza-8,8,10,10-tetramethyl-1,5-dioxaspiro[5.5]undecan
42) 9-Aza-8,8,10,10-tetramethyl-3-ethyl-1,5-dioxaspiro[5.5]undecan
43) 8-Aza 2,7,7,8,9,9-hexamethyl-1,4-dioxaspiro[4.5]decan
44) 9-Aza-3-hydroxymethyl-3-ethyl-8,8,9,10,10-pentamethyl-1,5-dioxaspiro [5.5]undecan
45) 9-Aza-3-ethyl-3-acetoxymethyl-9-acetyl-8,8,10,10-tetramethyl-1,5-dioxaspiro[5.5]undecan
46) 2,2,6,6-Tetramethylpiperidin-4-spiro-2′-(1′,3′-dioxan)-5′-spiro-5˝-(1˝,3˝-dioxan)-2˝-spiro-4‴-(2‴,2‴,6‴,6‴-tetramethylpiperidin).

d) Verbindungen der Formeln VA, VB und VC 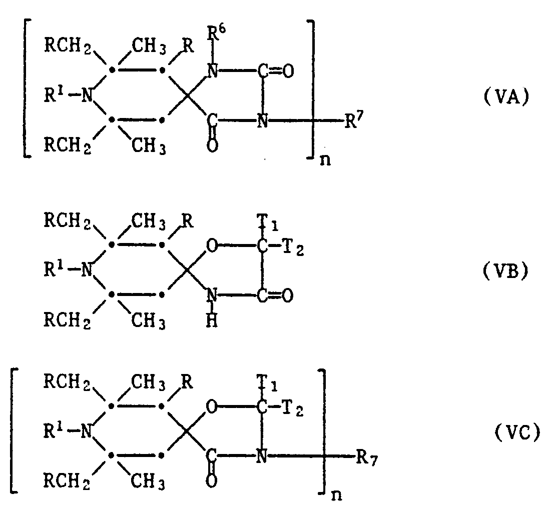 worin n die Zahl 1 oder 2 bedeutet, R und R¹ die unter a) angegebenen Bedeutungen und bevorzugten Bedeutungen haben, R⁶ Wasserstoff, C₁-C₁₂-Alkyl, Allyl, Benzyl, Glycidyl oder C₂-C₆ Alkoxyalkyl ist und R⁷, wenn n 1 ist, Wasserstoff, C₁-C₁₂-Alkyl, C₃-C₅-Alkenyl, C₇-C₉-Aralkyl, C₅-C₇ Cycloalkyl, C₂-C₄ Hydroxyalkyl, C₂-C₆ Alkoxyalkyl, C₆-C₁₀ Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄ Alkyl oder Phenyl sind, wenn n 2 ist, C₂-C₁₂ Alkylen, C₄-C₁₂-Alkenylen, C₆-C₁₂ Arylen, eine Gruppe -CH₂-CH(OH)-CH₂-O-D-O-CH₂-CH(OH)-CH₂-, worin D C₂-C₁₀ Alkylen, C₆-C₁₅ Arylen, C₆-C₁₂ Cycloalkylen ist, oder eine Gruppe -CH₂CH(OZ′)CH₂-(OCH₂-CH(OZ′)CH₂)₂- bedeutet, worin Z′ Wasserstoff, C₁-C₁₈ Alkyl, Allyl, Benzyl, C₂-C₁₂ Alkanoyl oder Benzoyl ist, T₁ und T₂ unabhängig voneinander Wasserstoff, C₁-C₁₈ Alkyl oder gegebenenfalls durch Halogen oder C₁-C₄ Alkyl substituiertes C₆-C₁₀ Aryl oder C₇-C₉ Aralkyl bedeuten oder T₁ und T₂ zusammen mit dem sie bindenden C-Atom einen C₅-C₁₂ Cycloalkanring bilden.

Bedeuten etwaige Substituenten C₁-C₁₂ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von C₁-C₁₈ Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten C₂-C₆ Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-butoxyethyl, Isopropoxyethyl oder Propoxypropyl dar.

Stellt R⁷ C₃-C₅-Alkenyl dar, so bedeutet es z.B. 1-Propenyl, Allyl, Methallyl, 2-Butenyl oder 2-Pentenyl.

Als C₇-C₉-Aralkyl sind R⁷, T₁ und T₂ insbesondere Phenethyl oder vor allem Benzyl. Bilden T₁ und T₂ zusammen mit dem C-Atom einen Cycloalkanring, so kann dies z.B. ein Cyclopentan-, Cyclohexan-, Cyclooctan-oder Cyclododecanring sein.

Bedeutet R⁷ C₂-C₄ Hydroxyalkyl, so stellt es z.B. 2-Hydroxyethyl, 2-Hydroxypropyl, 2-Hydroxybutyl oder 4-Hydroxybutyl dar.

Als C₆-C₁₀ Aryl bedeuten R⁷, T₁ und T₂ insbesondere Phenyl, α- oder β-Naphthyl, die gegebenenfalls mit Halogen oder C₁-C₄-Alkyl substituiert sind.

Stellt R⁷ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als C₄-C₁₂ Alkenylen bedeutet R⁷ insbesondere 2-Butenylen, 2-Pentenylen oder 3-Hexenylen.

Bedeutet R⁷ C₆-C₁₂-Arylen, so stellt es beispielsweise o-, m- oder p-Phenylen, 1,4-Naphthylen oder 4,4′-Diphenylen dar.

Bedeutet Z′ C₂-C₁₂-Alkanoyl, so stellt es beispielsweise Propionyl, Butyryl, Octanoyl, Dodecanoyl, aber bevorzugt Acetyl dar.

D hat als C₂-C₁₀-Alkylen, C₆-C₁₅-Arylen oder C₆-C₁₂-Cycloalkylen die unter b) angegebenen bevorzugten Bedeutungen.

Beispiele für Tetraalkylpiperidin-Verbindungen dieser Klasse sind folgende Verbindungen:
47) 3-Benzyl-1,3,8-triaza-7,7,9,9-tetramethylspiro[4.5]decan-2,4-dion
48) 3-n-Octyl-1,3,8-triaza-7,7,9,9-tetramethylspiro[4.5]decan-2,4-dion
49) 3-Allyl-1,3,8-triaza-1,7,7,9,9-pentamethylspiro[4.5]decan-2,4-dion
50) 3-Glycidyl-1,3,8-triaza-7,7,8,9,9-pentamethylspiro[4.5]decan-2,4-dion
51) 2-Iso-propyl-7,7,9,9-tetramethyl-1-oxa-3,8-diaza-4-oxo-spiro[4.5]decan
52) 2,2-Dibutyl-7,7,9,9-tetramethyl-1-oxa-3,8-diaza-4-oxo-spiro[4.5]decan
53) 2,2,4,4-Tetramethyl-7-oxa-3,20-diaza-21-oxo-dispiro[5.1.11.2]heneicosan
54) 2-Butyl-7,7,9,9-tetramethyl-1-oxa-4,8-diaza-3-oxo-spiro-[4,5]decan
54a) 8-Acetyl-3-dodecyl-1,3,8-triaza-7,7,9,9-tetramethylspiro[4,5]decan-2,4-dion
oder die Verbindungen der folgenden Formeln:

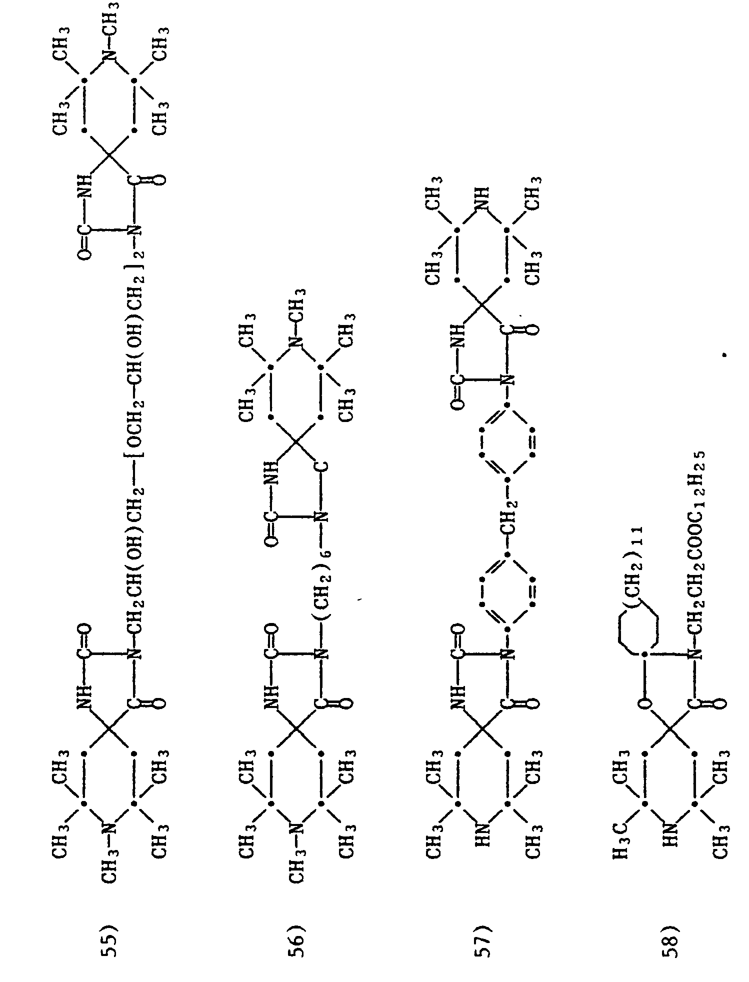

Bevorzugt unter den Verbindungen der Formeln VA, VB und VC werden ebenfalls solche eingesetzt, in denen mindestens einer der allgemeinen Substituenten eine ethylenische Doppelbindung enthält. R¹ hat die gleichen bevorzugten Bedeutungen wie in Formel II.
e) Verbindungen der Formel VI 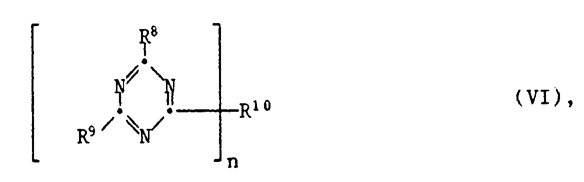 worin n die Zahl 1 oder 2 ist und R⁸ eine Gruppe der Formel 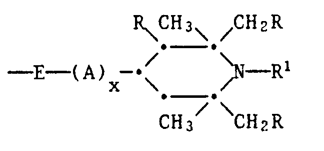 bedeutet, worin R und R¹ die unter a) angegebenen Bedeutungen und bevorzugten Bedeutungen haben, E -O- oder -NR¹¹- ist, A C₂-C₆-Alkylen oder -(CH₂)₃-O- und x die Zahlen 0 oder 1 bedeuten, R⁹ gleich R⁸ oder eine der Gruppen -NR¹¹R¹², -OR¹³, -NHCH₂OR¹³ oder -N(CH₂OR¹³)₂ ist, R¹⁰, wenn n = 1 ist, gleich R⁸ oder R⁹, und wenn n = 2 ist, eine Gruppe -E-B-E- ist, worin B gegebenenfalls durch -N(R¹¹)- unterbrochenes C₂-C₆ Alkylen bedeutet, R¹¹ C₁-C₁₂ Alkyl, Cyclohexyl, Benzyl oder C₁-C₄ Hydroxyalkyl oder eine Gruppe der Formel 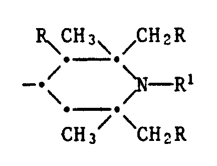 ist, R¹² C₁-C₁₂ Alkyl, Cyclohexyl, Benzyl, C₁-C₄ Hydroxyalkyl und R¹³ Wasserstoff, C₁-C₁₂ Alkyl oder Phenyl bedeuten oder R¹¹ und R¹² zusammen C₄-C₅-Alkylen oder -Oxaalkylen, beispielsweise 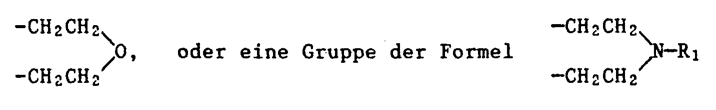 sind oder auch R¹¹ und R¹² jeweils eine Gruppe der Formel 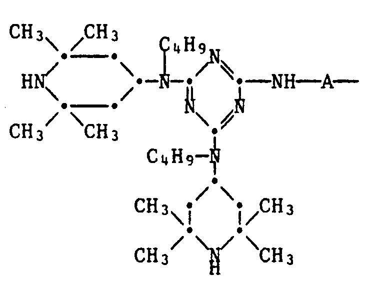 bedeuten.

Bedeuten etwaige Substituenten C₁-C₁₂ Alkyl, so stellen sie beispielsweise Methyl, Ethyl, n-Propyl, n-butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten C₁-C₄ Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A C₂-C₆ Alkylen, so stellt es beispielsweise Ethylen, Propylen, 2,2-Dimethylpropylen, Tetramethylen oder Hexamethylen dar.

Stellen R¹¹ und R¹² zusammen C₄-C₅ Alkylen oder Oxaalkylen dar, so bedeutet dies z.B. Tetramethylen, Pentamethylen oder 3-Oxapentamethylen.

Beispiele für Tetraalkylpiperidin-Verbindungen dieser Klasse sind die Verbindungen der folgenden Formeln: 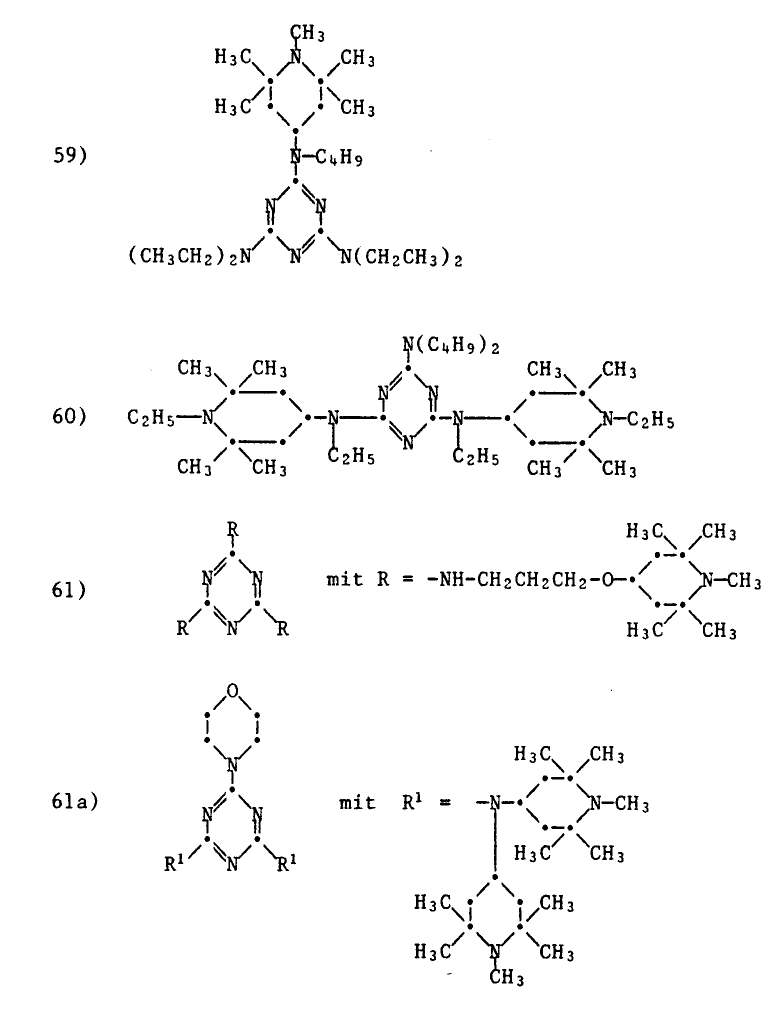 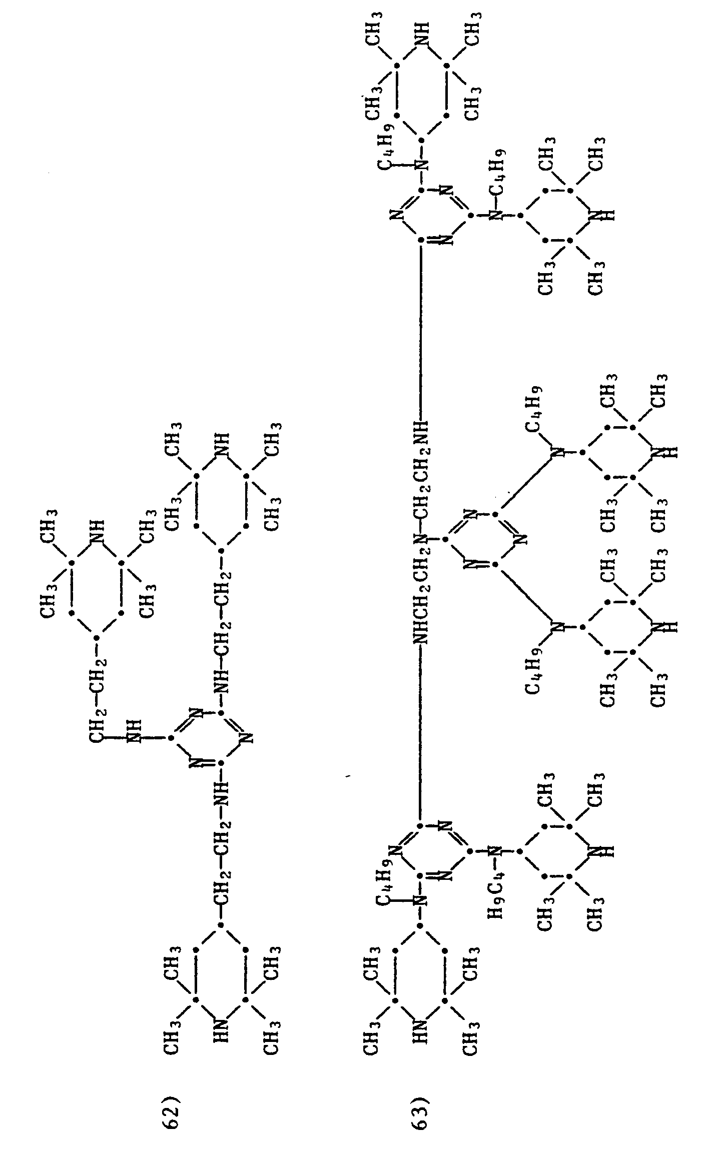 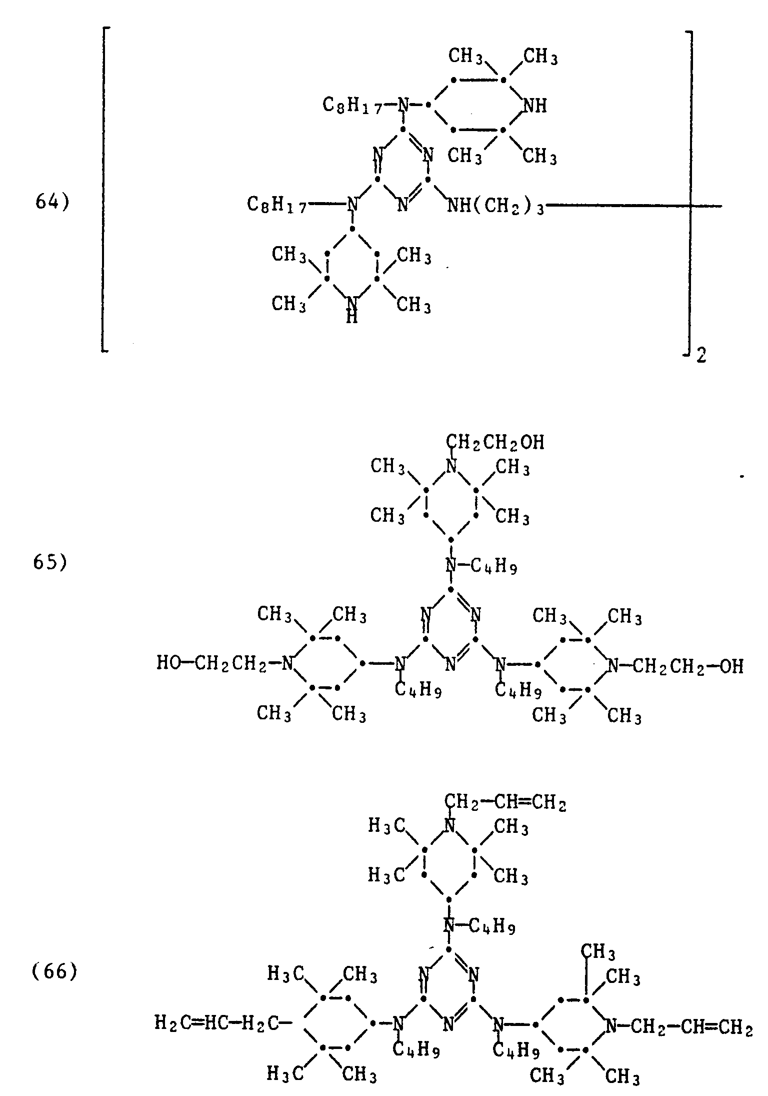
f) Oligomere oder polymere Verbindungen, deren wiederkehrende Struktureinheit einen 2,2,6,6-Tetraalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für 2,2,6,6-Tetraalkylpiperidin-Lichtschutzmittel dieser Klasse sind die Verbindungen der folgenden Formeln, wobei m eine Zahl von 2 bis 200 bedeutet.

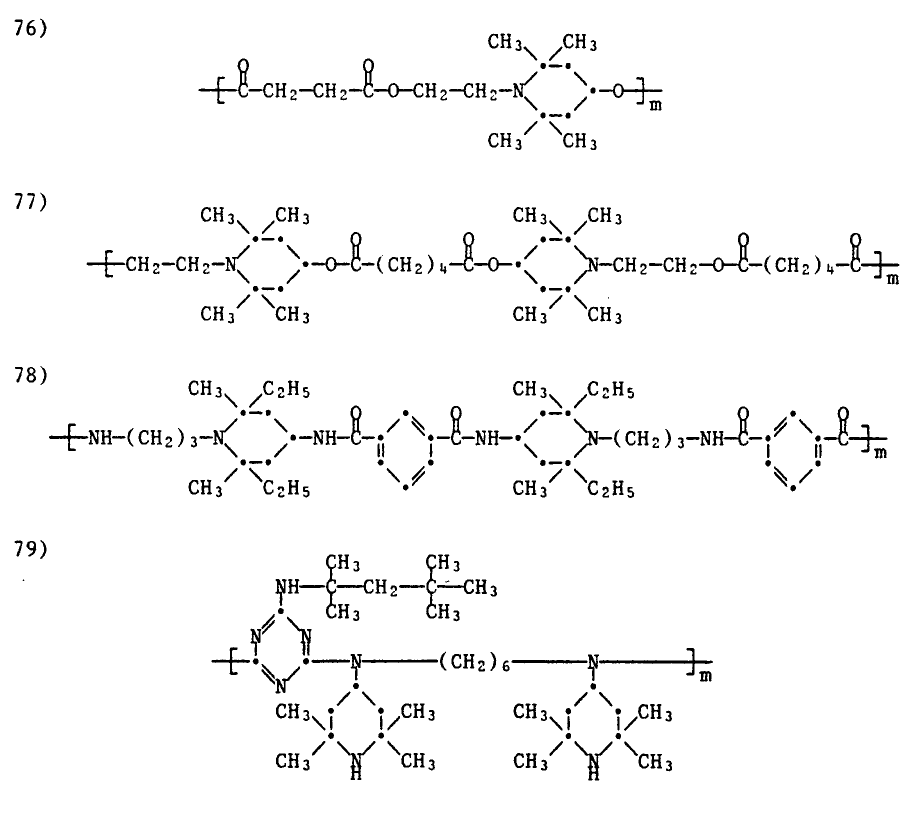

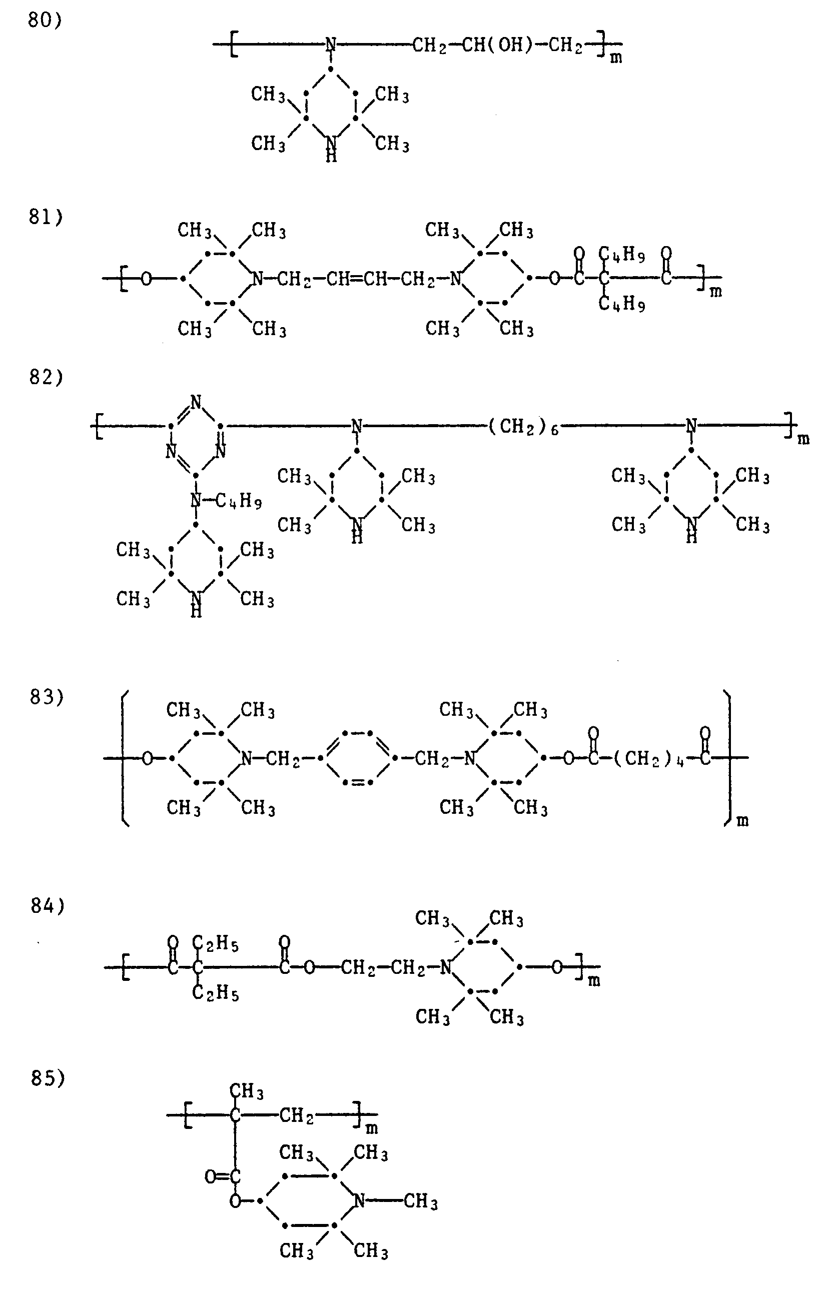

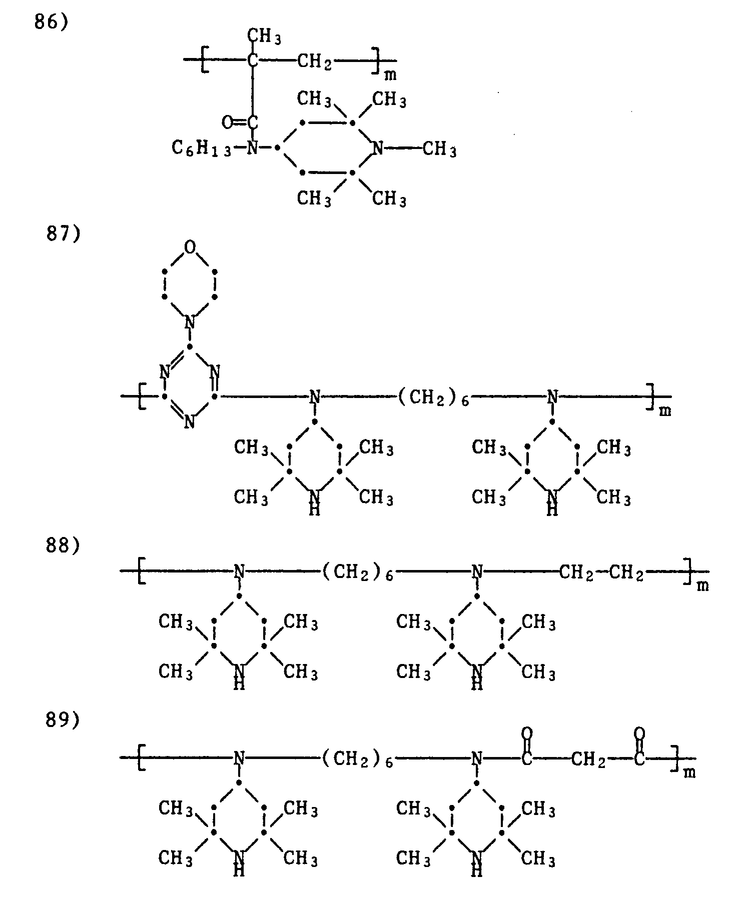

Im Hinblick auf die Lichtstabilisierung von Additionspolymermikroteilchen besonders bevorzugte sterisch gehinderte Amine sind solche, die ethylenisch ungesättigte Gruppen wie z.B. Allyl-, Vinyl- oder Maleinatgruppen, insbesondere jedoch Acryl- oder Methacrylgruppen, enthalten, die mit den übrigen Monomeren copolymerisieren. Daher sind jene Verbindungen der in den vorstehenden Kapiteln a) bis f) definierten Formeln erfindungsgemäss bevorzugt einsetzbar, die in mindestens einem der Substituenten eine ethylenische Doppelbindung enthalten. Dies kann z.B. im Substituenten R¹ und/oder im Substituenten in 4-Stellung des Piperidinringes sein. Beispiele für solche Verbindungen sind die zuvor aufgeführten Verbindungen 2, 7, 9, 17, 29e und 49 sowie die folgenden Verbindungen:
90) 1-Acetyl-2,2,6,6-tetramethyl-4-(meth)acryloyloxy-piperidin
91) 1-Benzyl-2,2,6,6-tetramethyl-4-(meth)acryloyloxy-piperidin
92) 1,2,2,6,6-Pentamethyl-4-(meth)acrylamido-piperidin
93) 1,2,2,6,6-Pentamethyl-4-(N-butyl)-acrylamido-piperidin
94) 1,2,2,6,6-Pentamethyl-4-maleinimido-piperidin
95) 1,3,8-Triaza-2,4-dioxo-3-acryloyloxyethyl-7,7,8,9,9-pentamethylspiro[4,5]decan
96) 1-[(2-Methacryloyloxy)-ethyl]-2,2,6,6-tetramethyl-piperidin.
97) 1,2,2,6,6-Pentamethyl-4-vinyloxy-piperidin
98) 1,2,2,6,6-Pentamethyl-4-methacryloyloxy-piperidin
99) 1-Acetyl-2,2,6,6-tetramethyl-4-maleinimido-piperidin

In besonderen Fällen kann es von Vorteil sein, ein Gemisch von sterisch gehinderten Aminen zu verwenden.

Die Lichtschutzmittel der Klasse der sterisch gehinderten Amine sind z.B. aus der EP-A 114 784 bekannt und können nach bekannten Verfahren hergestellt werden.

Die neben dem Typ der gehinderten Amine ebenfalls wichtige Gruppe von Lichtschutzmitteln sind die UV-Absorber, die verschiedenen Verbindungsklassen angehören. Auch die UV-Absorber eignen sich zur erfindungsgemässen Stabilisierung von Polymermikropartikeln. Die erste Klasse von solchen UV-Absorbern sind die 2-(2-Hydroxyphenyl)-benztriazole, von denen sich folgende Strukturtypen für die erfindungsgemässen Polymermikropartikel besonders eignen:
A) Verbindungen der Formel VII 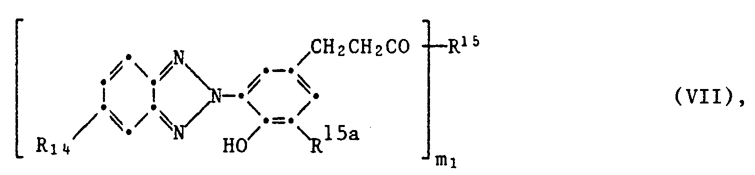 in der R¹⁴ H, Cl, C₁-C₄ Alkyl oder C₁-C₄ Alkoxy (vorzugsweise H) , R^{15a} Wasserstoff, C₁-C₁₂-Alkyl, insbesondere C₁-C₆-Alkyl, bevorzugt t-Butyl und m₁ eine der Zahlen 1 oder 2 bedeuten und in der R¹⁵
   a) im Falle von m₁ = 1
      -OR¹⁶ oder 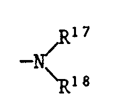 und
   b) im Falle von m₁ = 2 einen der zweiwertigen Reste
      -O-R²³-O- oder 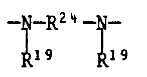 darstellt, wobei R¹⁶ H, gegebenenfalls durch 1 bis 10 OH-Gruppen substituiertes C₁-C₁₈-Alkyl, gegebenenfalls durch OH substituiertes C₅-C₁₂-Cycloalkyl, gegebenenfalls durch OH substituiertes geradkettiges oder verzweigtes C₂-C₁₈-Alkenyl, gegebenenfalls mit 1 oder 2 OH-Gruppen substituiertes C₆-C₁₄-Aryl, C₇-C₁₅-Alkaryl oder C₇-C₁₅-Aralkyl, 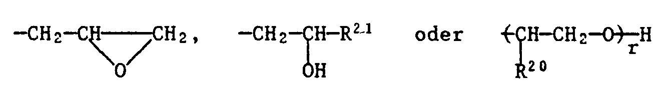 bedeutet,
      R¹⁷ und R¹⁸ unabhängig voneinander H, geradkettiges oder verzweigtes, gegebenenfalls mit einer oder mehreren OH-Gruppen substituiertes C₁-C₁₈-Alkyl, durch -O- oder -NR¹⁹- ein- oder mehrfach unterbrochenes geradkettiges oder verzweigtes C₃-C₁₈-Alkyl, gegebenenfalls mit einer oder mehreren OH-Gruppen substituiertes C₅-C₁₂-Cycloalkyl, gegebenenfalls mit 1 oder 2 OH-Gruppen substituiertes C₆-C₁₄-Aryl, C₇-C₁₅-Alkaryl oder C₇-C₁₅-Aralkyl oder geradkettiges oder verzweigtes C₃-C₈-Alkenyl bedeuten oder aber R¹⁷ und R¹⁸ zusammen mit dem N-Atom, an das sie gebunden sind, einen Pyrrolidin-, Piperidin-, Piperazin-oder Morpholinring darstellen,
      R¹⁹ H oder geradkettiges oder verzweigtes, gegebenenfalls durch eine oder mehrere OH-Gruppen substituiertes C₁-C₁₈-Alkyl ist,
      R²⁰ H oder Methyl und r eine ganze Zahl 1 bis 10 sind,
      R²¹ für H, geradkettiges oder verzweigtes C₁-C₁₈-Alkyl, gegebenenfalls durch OH substituiertes Phenyl, C₇-C₁₅-Aralkyl oder C₇-C₁₅-Alkaryl, -SO₂-C₁-C₄-Alkyl, -SO₂-C₇-C₁₈ Alkaryl, -SO₂-C₆-C₁₄-Aryl oder -CH₂-O-R²² steht,
      R²² geradkettiges oder verzweigtes C₁-C₁₈-Alkyl oder C₃-C₁₈-Alkenyl, C₅-C₁₂-Cycloalkyl, C₆-C₁₄-Aryl, C₇-C₁₅ Aralkyl oder C₇-C₁₅ Alkaryl ist,
      R²³ gegebenenfalls OH-substituiertes C₂-C₁₂-Alkylen oder C₄-C₈-Alkenylen, C₄-Alkinylen, Cyclohexylen, durch -O- ein- oder mehrfach unterbrochenes, geradkettiges oder verzweigtes C₄-C₁₈-Alkylen, 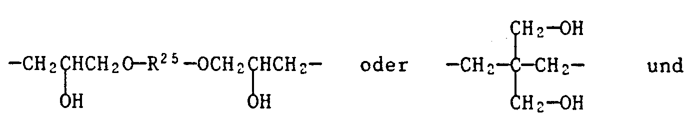 R²⁴ geradkettiges oder verzweigtes, gegebenenfalls durch -O- ein- oder mehrfach unterbrochenes C₂-C₁₂-Alkylen, Cyclohexylen, 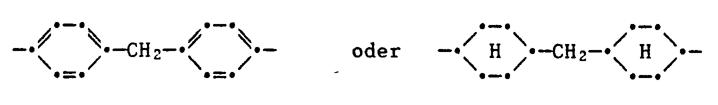 bedeuten, ober aber
      R²⁴ und R¹⁹ zusammen mit den beiden Stickstoffatomen einen Piperazinring darstellen, und wobei
      R²⁵ geradkettiges oder verzweigtes C₂-C₈-Alkylen, durch -O- ein- oder mehrfach unterbrochenes, geradkettiges oder verzweigtes C₄-C₁₀-Alkylen, 1,3- oder 1,4-Cyclohexylen, 1,3-oder 1,4-Phenylen, 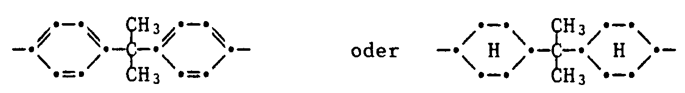 bedeutet.
      Besonders zu erwähnen sind solche Verbindungen der Formel VII, in denen R¹⁴ -OR¹⁶ bzw. -O-R²³-O- sind, und von diesen vor allem jene, in denen R¹⁶ gegebenenfalls OH-substituiertes Alkyl oder Alkenyl oder 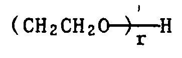 bzw. R²³ gegebenenfalls OH-substituiertes Alkylen oder Alkenylen oder durch O ein- oder mehrfach unterbrochenes Alkylen, z.B. -CH₂(CH₂OCH₂)_{r₁}CH₂- mit r₁ = 1 bis 9 bedeuten.
      R¹⁴ kann als Alkylrest, z.B. Methyl, Ethyl, Propyl, i-Propyl, Butyl und tert.-Butyl, als Alkoxyrest z.B. Methoxy, Ethoxy, Propoxy und Butoxy bedeuten.
      R¹⁶, R¹⁷ R¹⁸, R¹⁹, R²¹ und R²² können z.B. folgende Alkylreste bedeuten: Methyl, iso-Propyl, n-Butyl, sec.-Butyl, tert.-Butyl, tert.-Amyl, 2-Ethylhexyl, n-Octyl, 1,1,3,3-Tetramethylbutyl, n-Dodecyl, 1,1,7,7-Tetramethyloctyl, n-Octadecyl.
      Die Reste R¹⁶, R¹⁷, R¹⁸ und R¹⁹ sind bevorzugt durch eine oder mehrere OH-Gruppen substituiert.
      R¹⁷ und R¹⁸ können z.B. folgende C₃-C₁₈-Alkylreste, welche durch -S-, -O- oder -NR¹⁹- unterbrochen sind, oder/und durch -OH substituiert sein können, bedeuten:
      Methoxyethyl, Ethoxyethyl, Butoxyethyl, Butoxypropyl, Methylthioethyl, CH₃OCH₂CH₂OCH₂CH₂-, CH₃CH₂OCH₂CH₂OCH₂CH₂-, C₄H₉OCH₂CH₂OCH₂CH₂-, Dodecyloxypropyl, 2-Hydroxyethyl, 2-Hydroxypropyl, 4-Hydroxybutyl, 6-Hydroxyhexyl,
      -CH₂CH₂-NH-C₄H₉, -CH₂CH₂CH₂NH-C₈H₁₇ 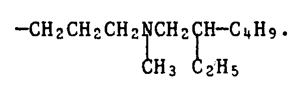
      R¹⁶, R¹⁷, R¹⁸ und R²² können z.B. folgende C₅-C₁₂ Cycloalkylreste bedeuten: Cyclopentyl, Cyclohexyl, Cyclooctyl oder Cyclododecyl. Im Fall von R¹⁶, R¹⁷ und R¹⁸ kann der Cycloalkylrest auch OH-substituiert sein.
      R¹⁷ und R¹⁸ können z.B. folgende Alkenylreste bedeuten: Allyl, Methallyl, 2-n-Hexenyl, 4-n-Octenyl.
      Wenn R¹⁶ Alkenyl bedeutet, so kann es dieselbe Bedeutung wie R¹⁷ und R¹⁸ als Alkenylreste haben, es kann aber auch z.B. -CH=CH₂, 10-n-Undecenyl oder 9-n-Octadecenyl darstellen, wobei der Rest R¹⁶ auch OH-substituiert sein kann.
      R¹⁶, R¹⁷, R¹⁸, R²¹ und R²² können unabhängig voneinander z.B. folgende C₇-C₁₅-Aralkylreste bedeuten: Benzyl, α-Phenylethyl, β-Phenylethyl, 4-tert.-Butylbenzyl.
      R¹⁶, R¹⁷, R¹⁸ und R²² können unabhängig voneinander z.B. folgende C₆-C₁₄-Arylreste bedeuten: Phenyl, α-Naphtyl, β-Naphthyl.
      Stehen R¹⁶, R¹⁷, R¹⁸, R²¹ oder R²² für C₇-C₁₅-Alkaryl, so kann es sich um einen Tolyl-, Xylyl-, Ethylphenyl-, Isopropylphenyl-, n-Butylphenyl-, tert.-Butylphenyl-, Octylphenyl-, di-tert. Butylphenyl- oder Nonylphenylrest handeln. Die Reste können am aromatischen Kern oder bevorzugt am Alkylsubstituenten mit einer oder mehreren OH-Gruppen substituiert sein.
      Hat R²¹ die Bedeutung -SO₂-C₁-C₄-Alkyl, so kann es sich bei dem Alkyl um einen Methyl-, Ethyl-, n-Propyl-, Isopropyl- oder n-, sec.- oder tert.-Butylrest handeln.
      Steht R²¹ für -SO₂-C₆-C₁₄-Aryl, so hat das Aryl z.B. die Bedeutung Phenyl, α- oder β-Naphthyl.
      Bei R²¹ als -SO₂-C₇-C₁₈-Alkaryl hat das Alkaryl unabhängig die zuvor für R¹⁶ beschriebenen Bedeutungen.
      R²³ und R²⁵ können als C₂-C₈-Alkylen z.B. folgende Reste bedeuten: Ethylen, Propylen, Butylen, Hexylen, Octylen.
      R²⁴ kann als Alkylen unabhängig die Bedeutung von R²³ haben oder aber zusätzlich auch noch höhermolekulare Gruppen, wie Decylen, Dodecylen darstellen.
      Ist R²³ ein C₄-C₈-Alkenylen, so kommt z.B. folgende Gruppe in Betracht: Butenylen.
      Als durch -O- unterbrochene, geradkettige oder verzweigte C₄-C₁₀-Alkylengruppen kommen im Falle R²³ und R²⁵ z.B. die folgenden Gruppen in Frage:
      -CH₂CH₂OCH₂CH₂-CH₂CH₂OCH₂CH₂OCH₂CH₂- 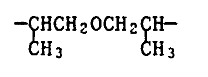 -CH₂CH₂OCH₂CH₂OCH₂CH₂OCH₂CH₂-.
      Typische Vertreter von Verbindungen der Formel VII, in der m die Zahl 1 bedeutet, sind die folgenden:
      2-[2-Hydroxy-5-(2-carboxyethyl)-phenyl]-benztriazol,
      2-[2-Hydroxy-3-tert.-butyl-5-(2-carboxyethyl)-phenyl]-benztriazol,
      2-[2-Hydroxy-3-tert.-butyl-5-(2-carboxyethyl)-phenyl]-5-chlorbenztriazol,
      2-[2-Hydroxy-3-tert.-butyl-5-(2-carbomethoxyethyl)-phenyl]-benztriazol
      2-[2-Hydroxy-3-tert.-butyl-5-(2-carbomethoxyethyl)-phenyl]-5-chlorbenztriazol
      2-[2-Hydroxy-3-tert.-butyl-5-(2-carbocyclohexyloxyethyl)-phenyl]-benztriazol
      2-[2-Hydroxy-3-tert.-butyl-5-(2-carbooctyloxyethyl)-phenyl]-benztriazol
      2-{2-Hydroxy-3-tert.-butyl-5-[2-carbo-(2-ethylhexyloxy)-ethyl]-phenyl}-benztriazol
      2-[2-Hydroxy-3-tert.-butyl-5-(2-carbo-iso-decyloxyethyl)-phenyl]-benztriazol
      2-[2-Hydroxy-3-tert.-butyl-5-(2-carbododecyloxyethyl)-phenyl]-benztriazol
      2-[2-Hydroxy-3-tert.-butyl-5-(2-carbododecyloxyethyl)-phenyl]-5-chlorbenztriazol
      2-[2-Hydroxy-3-tert.-butyl-5-(2-carbooctyloxyethyl)-phenyl]-5-chlorbenztriazol
      2-{2-Hydroxy-3-tert.-butyl-5-[2-carbo-(2-ethylhexyloxy)-ethyl]-phenyl}-5-chlorbenztriazol
      2-{2-Hydroxy-3-tert.-butyl-5-[2-carbo-(2-hydroxycyclohexyloxy)-ethyl]-phenyl}-benztriazol
      2-[2-Hydroxy-3-tert.-butyl-5-(2-carbopiperidylamidoethyl)-phenyl]-benztriazol
      2-[2-Hydroxy-3-tert.-butyl-5-(2-carbomorpholinamidoethyl)-phenyl]-benztriazol
      2-{2-Hydroxy-3-tert.-butyl-5-[2-carbo-(3,5-di-tert.-butyl-4-hydroxyanilido)-ethyl]-phenyl}-benztriazol
      Typische Vertreter von Verbindungen der Formel VII, in der m₁ die Zahl 2 bedeutet, sind die folgenden: 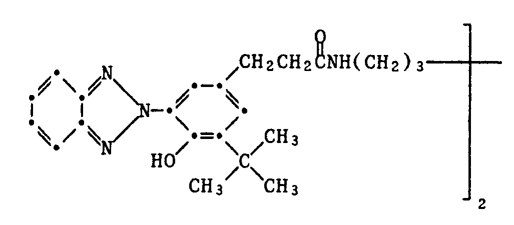 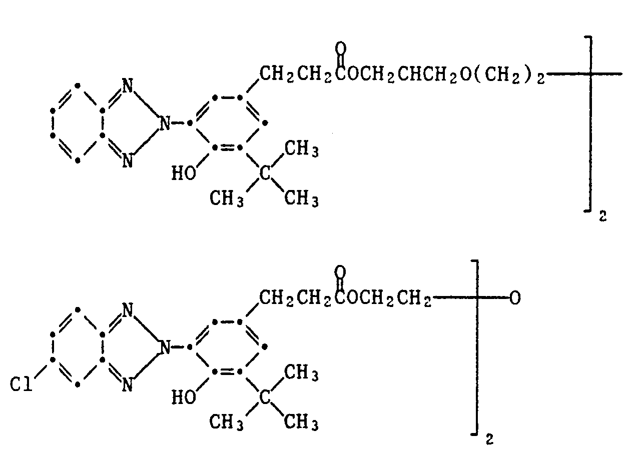 Weitere bevorzugte Verbindungen der Formel VII sind:
      2-[2-Hydroxy-3-tert.butyl-5-(2-carbo-n-octyloxyethyl)-phenyl]-benztriazol
      2-{2-Hydroxy-3-tert.butyl-5-[2-carbo-(2-ethylhexyl)-oxyethyl]-phenyl}-benztriazol
      2-[2-Hydroxy-3-tert.butyl-5-(2-carbo-n-octyloxylethyl)-phenyl]-5-chlorbenztriazol
      2-{2-Hydroxy-3-tert.butyl-5-[2-carbo-(2-ethylhexyl)-oxyethyl]-phenyl}-5-chlorbenztriazol
      und die Verbindung der Formel 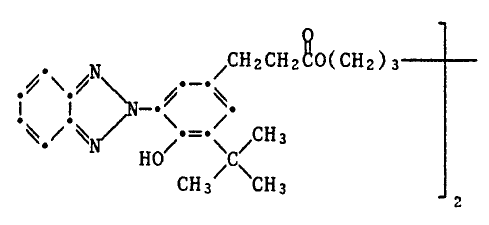
      In bestimmten Fällen kann es von Vorteil sein, ein Gemisch von zwei oder mehreren Verbindungen der Formel VII zu verwenden. Ein Beispiel hierfür ist ein Gemisch von
      2-[2-Hydroxy-3-tert.butyl-5-(2-carbo-n-octyloxyethyl-phenyl]-5-chlorbenztriazol und
      2-{2-Hydroxy-3-tert.butyl-5-[2-carbo-(2-ethylhexyl)-oxyethyl]-phenyl}-5-chlorbenztriazol, die im Gewichtsverhältnis 1:1 vorliegen.
B) Verbindungen der Formel VIII 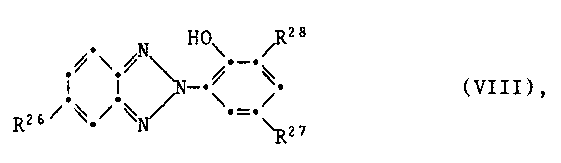 worin R²⁶ H, Chlor oder Carboxy ist,
   R²⁷ für geradkettiges oder verzweigtes, gegebenenfalls substituiertes C₁-C₁₈-Alkyl, C₇-C₁₅ Aralkyl, C₂-C₃Alkenyl oder die Gruppe 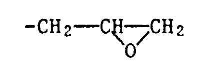 steht und
   R²⁸ H ist oder unabhängig die Bedeutung von R²⁷ hat.
   R²⁷ und R²⁸ als gegebenenfalls substituiertes C₁-C₁₈-Alkyl können hierbei unabhängig voneinander die zuvor für R¹⁶ angegebenen Bedeutungen haben. Als weitere Substituenten kommen Carboxylgruppen in Frage. Bevorzugt sind die Alkyl-Substituenten mit mindestens einer Hydroxy- oder Carboxy-Gruppe substituiert.
   Bedeuten R²⁷ und R²⁸ C₇-C₁₅-Aralkyl, so können die Reste unabhängig voneinander z.B. Benzyl, α-Phenylethyl, β-Phenylethyl, α,α-Dimethylbenzyl oder 4-tert.-Butylbenzyl bedeuten.
   Beispiele für geeignete Verbindungen der Formel VIII sind 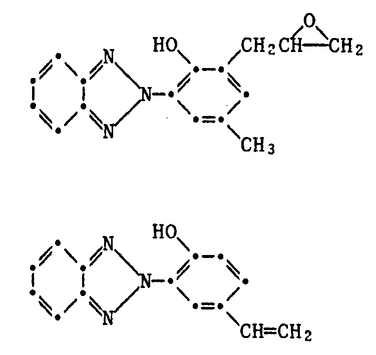
C) Verbindungen der Formel IX 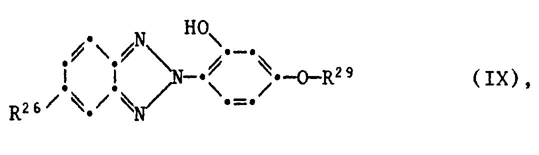 worin R²⁶ die zuvor genannte Bedeutung hat und
   R²⁹ geradkettiges oder verzweigtes gegebenenfalls durch eine oder mehrere OH-, Carboxy- oder Epoxy-Gruppen substituiertes C₁-C₁₈-Alkyl, welches gegebenenfalls ein- oder mehrfach mit -O- unterbrochen sein kann, 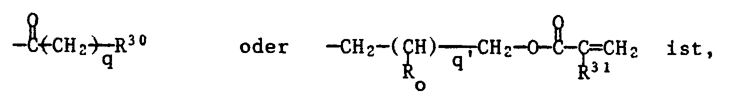 q eine ganze Zahl von 1 bis 12 darstellt,
   R³⁰ Carboxy oder 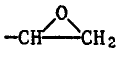 bedeutet und
   R³¹ für Wasserstoff oder Methyl, Rₒ für Wasserstoff oder Hydroxy und q′ für 0 oder 1 stehen.
   Hierbei ist R²⁹ als substituiertes C₁-C₁₈-Alkyl bevorzugt mit 1 bis 3 OH-, Carboxy- oder Epoxy-Gruppen und besonders bevorzugt mit einer OH-, Carboxy- oder Epoxy-Gruppe substituiert.
   Handelt es sich bei R²⁹ und mit -O- unterbrochenes C₁-C₁₈-Alkyl, so kann der Rest z.B. die folgende Struktur 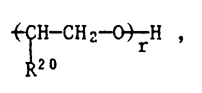 worin r und R²⁰ die zuvor angegebenen Bedeutungen haben, aufweisen.
   Beispiele für geeignete Lichtschutzmittel der Formel IX sind: 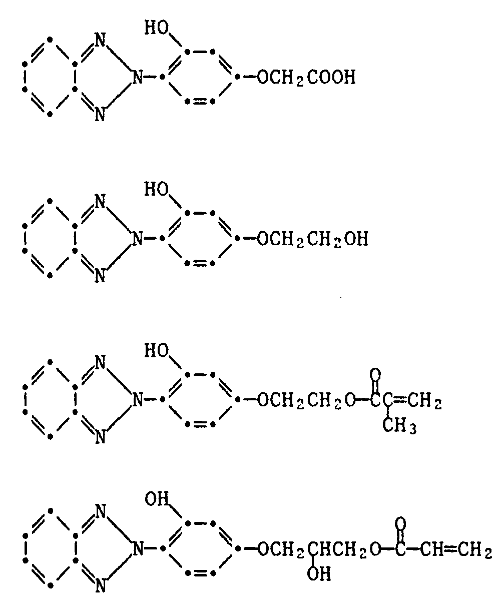
D) Verbindungen der Formel X 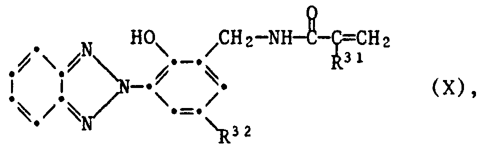 worin R³¹ die zuvor angegebene Bedeutung hat und
   R³² Wasserstoff oder geradkettiges oder verzweigtes gegebenenfalls einfach oder mehrfach durch -OH substituiertes C₁-C₁₈-Alkyl ist.
   R³² als C₁-C₁₈-Alkyl kann hierbei die zuvor für R¹⁶ angegebenen Bedeutungen haben und ist bevorzugt unsubstituiertes C₁-C₁₂-Alkyl. Beispiele für 2-(2-Hydroxyphenyl)benztriazole dieses Strukturtyps sind: 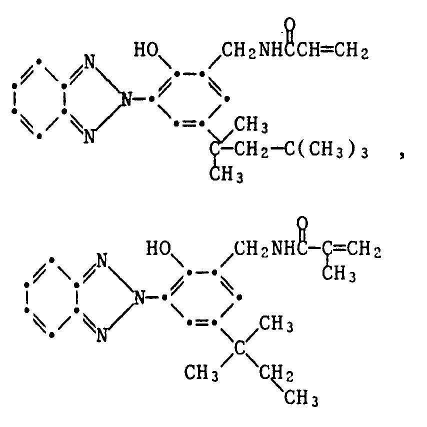
E) Verbindungen der Formel XI 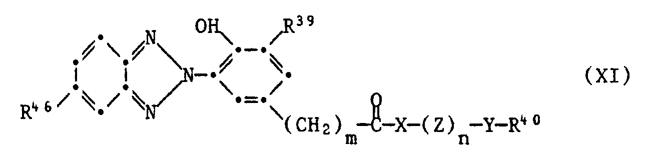 worin
   - X: -O- oder -N(R⁴¹)- bedeutet, und
   - Y: -O- oder -N(R⁴²)- ist, und
   - Z: C₂-C₁₂Alkylen, durch ein bis drei -N(R⁴⁷)-Gruppen und/oder Sauerstoff-Atome unterbrochenes C₄-C₁₂Alkylen, durch eine Hydroxygruppe substituiertes C₃-C₁₂Alkylen, Butenylen, Butinylen, Cyclohexylen oder Phenylen bedeutet, und
   - m: die Zahl 0, 1 oder 2 ist und
   - n: 1, und falls X und Y -N(R⁴¹)- bzw. -N(R⁴²) sind, auch 0 bedeutet, und
   - R⁴⁶: Wasserstoff, Chlor, C₁-C₄Alkyl oder C₁-C₄ Alkoxy (vorzugsweise Wasserstoff) ist, und
   - R³⁹: Wasserstoff oder C₁-C₈Alkyl bedeutet, und
   - R⁴⁰: eine Gruppe -C(O)-C(R⁴³) = C(H)R⁴⁴ ist, oder falls Y -N(R⁴²)-ist, zusammen mit R⁴² eine Gruppe -C(O)-CH = CH-C(O)-bildet, wobei R⁴³ Wasserstoff oder Methyl ist, und R⁴⁴ Wasserstoff, Methyl oder -C(O)-X-R⁴⁵ bedeutet, wobei R⁴⁵ Wasserstoff, C₁-C₁₂Alkyl oder eine Gruppe der Formel 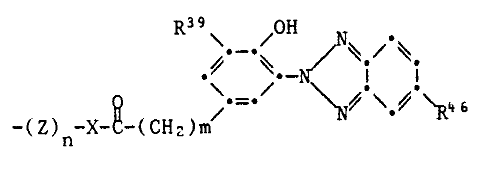
   bedeutet,
   worin die Symbole R⁴⁶, R³⁹, X, Z, m und n die oben angegebene Bedeutung haben, und
   R⁴¹, R⁴² und R⁴⁷ unabhängig voneinander Wasserstoff, C₁-C₁₂Alkyl, durch 1 bis 3 Sauerstoffatome unterbrochenes C₃-C₁₂Alkyl, Cyclohexyl oder C₇-C₁₁Aralkyl bedeuten, und R⁴¹ ferner zusammen mit R⁴², falls Z Ethylen ist, auch Ethylen bilden.
   Bevorzugt ist in Formel XI R⁴⁶ Wasserstoff oder Cl, X O oder NH, vor allem O, m 2, n 1, Z C₂-C₆-Alkylen, Cyclohexylen oder Phenylen, Y O oder NH, vor allem O, R⁴⁰ -C(O)-C(R⁴³)=C(H)R⁴⁴ mit R⁴⁴=Wasserstoff oder Methyl.
   Beispiele für Benztriazole der Formel XI sind:
   3-(2H-Benzotriazol-2-yl)-4-hydroxy-5-tert.butyl-benzolpropansäure-(2-acrylyloxy)-cyclohexylester,
   3-(5-Chlor-2H-benzotriazol-2-yl)-4-hydroxy-5-tert.butylbenzolpropansäure-(2-acrylyloxy)-cyclohexylester,
   N-(2-Acrylyloxyethyl)-3-(2H-benzotriazol-2-yl)-4-hydroxy-5-tert.butyl-benzolpropanamid,
   N-(2-Acrylyloxyethyl)-3-(5-chlor-2H-benzotriazol-2-yl)-4-hydroxy-5-tert.butyl-benzol-propanamid,
   N-(3-Acrylyloxypropyl)-3-(2H-benzotriazol-2-yl)-4-hydroxy-5-tert.butyl-benzolpropanamid,
   3-(2H-Benzotriazol-2-yl)-4-hydroxy-5-tert.butyl-benzolpropansäure-(2-acrylyloxy)-propylester,
   3-(2H-Benzotriazol-2-yl)-4-hydroxy-5-tert.butylbenzolpropansäure-(2-acrylyloxy)-butylester,
   3-(2H-Benzotriazol-2-yl)-4-hydroxy-5-tert.butyl-benzolpropansäure-(2-acrylyl-2-phenyl)-äthylester,
   3-(2H-Benzotriazol-2-yl)-4-hydroxy-5-tert.butyl-benzolpropansäure-(2-acrylyl-3-phenoxy)-propylester und
   N-(2-(4-Methoxy-1,4-dioxo-cis-but-2-en-1-yloxy)-ethyl)-3-(2H-benzotriazol-2-yl)-4-hydroxy-5-tert.butyl-benzol-propanamid.
F) Verbindungen der Formel XIa 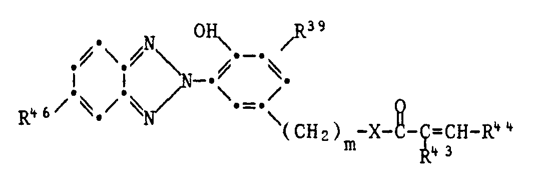 worin m, R³⁹, R⁴³, R⁴⁴ und R⁴⁶ wie unter Formel XI definiert sind. Für die Formel XIa gelten die gleichen Bevorzugungen wie für Formel XI.
G) Verbindungen der Formel XII 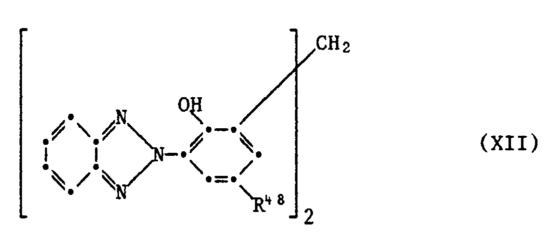 worin R⁴⁸ gegebenenfalls substituiertes C₁-C₁₈-Alkyl, C₇-C₁₅-Aralkyl oder C₂-C₃-Alkenyl bedeutet.

R⁴⁸ als gegebenenfalls substituiertes Alkyl kann dabei z.B. die oben für R¹⁶ angegebenen Bedeutungen haben. Als weitere Substituenten kommen Carboxylgruppen in Betracht. Ist R⁴⁸ als Alkyl substituiert, dann vorzugsweise durch 1 bis 3 Hydroxyl- oder/und 1 Carboxylgruppe. Bevorzugt ist jedoch R⁴⁸ als Alkyl unsubstituiert.

Die als Lichtschutzmittel für die Mikropartikel in Frage kommenden 2-(2-Hydroxyphenyl)-benztriazole sind bekannt oder können nach an sich bekannten Methoden, z.B. gemäss der EP-A 57 160, der EP-A 133 165 und anderer dem Fachmann bekannter Dokumente betreffend 2-(2-Hydroxyphenyl)-benztriazole hergestellt werden. Die in dieser Anmeldung beschriebenen Lichtschutzmittel (Piperidinlichtschutzmittel und UV-Absorber) sind auch in der EP-A 226 538 beschrieben.

Einen weiteren Typ von geeigneten Lichtschutzmitteln aus der Gruppe der UV-Absorber stellen 2-Hydroxybenzophenone dar, die z.B. eine Struktur gemäss Formel XIII 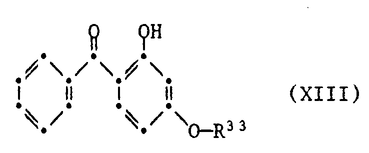
aufweisen, worin R³³ für Wasserstoff oder geradkettiges oder verzweigtes, gegebenenfalls einfach oder mehrfach durch -O- unterbrochenes und bevorzugt mit mindestens einer Hydroxy-, Carboxy- oder Epoxy-Gruppe substituiertes C₁-C₁₈-Alkyl oder für 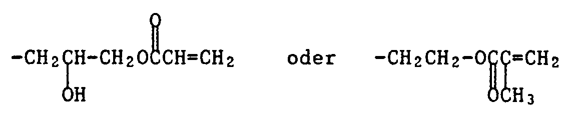
steht.

Beispiele für geeignete 2-Hydroxybenzophenone sind das 4-Hydroxy-, 4-Methoxy-, 4-Octyloxy-, 4-Decyloxy- oder 4-Dodecyloxyderivat, wobei diese mit 1 bis 3, bevorzugt 1, Hydroxy-, Carboxy- oder Epoxygruppe substituiert sein können.

Weitere Klassen von geeigneten UV-Absorbern umfassen 2,4-Bis-(2′-hydroxyphenyl)-6-alkyl-s-triazine wie z.B. das 6-Ethyl-, 6-Heptadecyl-oder 6-Undecylderivat sowie Oxalsäurediamide, insbesondere Oxalsäuredianilide, wie z.B. 4,4′-Di-octyloxy-oxanilid, 2,2′-Di-octyloxy-5,5′-di-tert.butyl-oxanilid, 2,2′-Di-dodecyloxy-5,5′-di-tert.butyl-oxanilid, 2-Ethoxy-2′-ethyl-oxanilid, N,N′-Bis-(3-dimethylaminopropyl)-oxalamid, 2-Ethoxy-5-tert.butyl-2′-ethyl-oxanilid und dessen Gemisch mit 2-Ethoxy-2′-ethyl-5,4′-di-tert.butyl-oxanilid, Gemische von o- und p-Methoxy- sowie von o- und p-Ethoxy-di-substituierten Oxaniliden.

Als Lichtschutzmittel für die Mikropartikel kommen weiterhin Zimtsäurederivate der Formel XIV 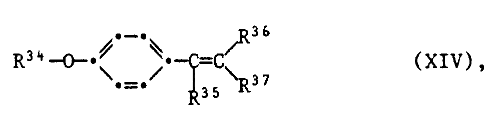
in Frage, wobei R³⁴ für Wasserstoff oder geradkettiges oder verzweigtes gegebenenfalls durch -O- unterbrochenes C₁-C₁₈-Alkyl steht, R³⁵ Wasserstoff, C₁-C₄-Alkyl, Methoxy oder Phenyl bedeutet, und R³⁶ und R³⁷ unabhängig voneinander Carboxy-, Cyano- oder -C(O)OR³⁸- Gruppen sind und R³⁸ für geradkettiges oder verzweigtes gegebenenfalls durch -O- unterbrochenes C₁-C₁₈-Alkyl steht. Beispiele für geeignete Zimtsäurederivate sind α-Cyan-β,β-diphenylacrylsäureethylester bzw. -isooctylester, α-Carbomethoxyzimtsäuremethylester, α-Cyano-β-methoxyzimtsäuremethylester.

Wie bereits früher erwähnt, sind solche Lichtschutzmittel bevorzugt, die in den erfindungsgemässen Polymermikropartikeln chemisch verankert werden können, also einpolymerisiert werden. Generell trifft dies auf Lichtschutzmittel zu, insbesondere auf jene der vorstehend definierten Klassen, die reaktive Substituenten enthalten, die unter den Herstellungsbedingungen an der Polymerisationsreaktion teilnehmen können. Derartige Substituenten sind insbesondere solche, die ethylenische Doppelbindungen (diese vor allem bei Verwendung in durch Polyaddition herzustellenden Polymermikropartikeln, z.B. Acrylate) sowie Carboxy- Hydroxy- und Epoxigruppen enthalten. Die drei letztgenannten Gruppen kommen vor allem bei der Verwendung in durch Polykondensation herzustellenden Mikropartikeln (z.B. Polyester) in Frage. Ferner können auch solche Lichtschutzmittel, zumindest teilweise, chemisch gebunden werden, die Gruppen enthalten, aus denen unter den Polymerisationsbedingungen reaktive Gruppen entstehen. Als solche seien z.B. Estergruppen und Estergruppen enthaltende zusammengesetzte Substituenten genannt.

Im Falle der gehinderten Amin-Lichtschutzmittel sind vor allem jene bevorzugt, die Hydroxylgruppen oder ethylenische Doppelbindungen enthaltende Reste tragen. Bei den UV-Absorbern sind jene bevorzugt, die Hydroxyl-, Carboxyl- oder Epoxigruppen oder ethylenische Doppelbindungen enthaltende Gruppen aufweisen.

Generell werden als Lichtschutzmittel die 2,2,6,6-Tetraalkylpiperidinderivate (insbesondere jene in den obigen Abschnitten a) bis f) genannten) sowie die 2-(2-Hydroxyphenyl)-benztriazole (insbesondere jene in den obigen Abschnitten A) bis G) genannten), bevorzugt eingesetzt. Besonders zu erwähnen sind dabei die Verbindungen der Formeln II, III, IV, VA-VC und VI (insbesondere jene der Formeln II, III, Va und VI) sowie der Formeln VII, IX, X und XI und XIa, von den UV-Absorbern insbesondere jene der Formeln XIa und vor allem XI.

Die vorliegende Erfindung betrifft auch ein Verfahren zur Herstellung von lichtstabilisierten Polymermikropartikeln mit einem vernetzten Kern und einer Teilchengrössenverteilung von 0,01-20 µm, das dadurch gekennzeichnet ist, dass man a) eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren, Lactone, Aminocarbonsäuren, Aminoalkohole und Polyamine mit b) mindestens einer Epoxid-Verbindung, die mindestens eine weitere reaktive Gruppe enthält, in Gegenwart von 0,1 bis 30 Gew.-%, bezogen auf die Monomeren, eines oder mehrerer Lichtschutzmittel(s) so copolymerisiert, dass im wesentlichen nur die genannte(n) weitere(n) reaktive(n) Gruppe(n) der Epoxid-Verbindung an der Polymerisation teilnehmen, wodurch die erhaltenen Mikropartikel freie Epoxygruppen enthalten, und dass der Kern des erhaltenen Polymeren vernetzt ist.
Dabei kann die Polymerisation in einem oder mehreren Schritten stattfinden, wobei mindestens ein Schritt in Gegenwart des (der) Lichtschutzmittel(s) erfolgt.

Besonders vorteilhaft dienen als Monomere a) Acrylsäure und Methacrylsäure und deren Derivate, z.B. deren Ester, insbesondere die Methyl- oder Ethylester. Vorteilhaft werden Monomerengemische eingesetzt (Copolymere). Auf diese Weise erhält man z.B. Polyacrylat/Epoxid-Mikropartikel. Zur Herstellung von Polyester/Epoxid-Mikropartikeln können als Monomere vorteilhaft Polyalkohole, Polycarbonsäuren und Hydroxycarbonsäuren eingesetzt werden. Auch Mischungen von beiden Typen sind möglich, sofern Monomere eingesetzt werden, die Funktionalitäten sowohl für Additions- als auch Kondensationspolymerisation aufweisen. Beispiele für zu verwendende Monomeren sind weiter oben angeführt, ebenso wie für einzusetzende Epoxid-Verbindungen der Komponente b).

Besonders vorteilhaft ist es, wenn Mikropartikel hergestellt werden, die eine bessere Dispergierbarkeit der Partikel vermittelnde Teile enthalten. Diese Teile können z.B. aus einem amphipathischen Dispersionsmittel bestehen, das ein im wesentlichen lineares bis verzweigtes Polymeres ist, das an den Polymermikropartikelkern anpolymerisiert ist.

Das erfindungsgemässe Verfahren wird dann z.B. so ausgeführt, dass man
a₁) eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren und Lactone mit mindestens einer Epoxid-Verbindung, die mindestens eine weitere reaktive Gruppe enthält, vernetzend copolymerisiert, dass im wesentlichen nur die genannte(n) weitere(n) reaktive(n) Gruppe(n) der Epoxid-Verbindung an der Polymerisation teilnehmen, wodurch freie Epoxygruppen erhalten bleiben,
b₁) eine oder mehrere der unter a₁) genannten Monomeren zu einem im wesentlichen linearen bis wenig verzweigten Polymeren polymerisiert, wobei diese Polymerisation auch in Abwesenheit der Epoxidverbindung erfolgen kann, und
c₁) das gemäss b₁) erhaltene Polymer an das gemäss a₁) erhaltene Polymer anpolymerisiert (aufgraftet),
wobei die Polymerisation gemäss a₁) oder gemäss b₁) oder beide Polymerisationen in Gegenwart eines oder mehrerer Lichtschutzmittel durchgeführt werden und wobei die Lichtschutzmittel in beiden Polymerisationsschritten gleich oder verschieden sein können und die Gesamtmenge an Lichtschutzmittel 0,1 bis 30 Gew.-%, bezogen auf die Monomeren in beiden Polymerisationsschritten, beträgt, und wobei die Polymerisation a₁) ganz oder teilweise in Gegenwart des gemäss b₁) gebildeten Polymeren erfolgen kann.

Als Monomere im Schritt b₁) kommen prinzipiell solche in Betracht, die auch für Schritt a₁) Verwendung finden. Sie müssen jedoch so gewählt werden, dass bei der Polymerisation keine Vernetzung eintritt. Die gemäss Schritt b₁) erhaltenen linearen bis wenig verzweigten Polymeren ("amphipathischen Dispersionsmittel") sind vorzugsweise Copolymere, die auf die gemäss a) erhaltenen vernetzten Polymeren ("Kern") in üblicher Weise gegraftet werden. Im Schritt b₁) muss nicht das Epoxid als Komponente einpolymerisiert werden, d.h. die anpolymerisierten Polymerketten ("amphipathisches Dispersionsmittel") müssen keine Epoxidgruppen enthalten. Besonders gut lichtstabilisierte Mikropartikel werden erhalten, wenn der Zusatz des Lichtschutzmittels zum Polymerisationsschritt b₁) oder sowohl zu Schritt b₁) als auch zu Schritt a₁) erfolgt.

Eine weitere vorteilhafte Ausführungsform besteht darin, dass man
a₁) eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren und Lactone vernetzend polymerisiert,
b₁) eine oder mehrere der unter a₁) genannten Monomeren mit mindestens einer Epoxid-Verbindung, die mindestens eine weitere reaktive Gruppe enthält, zu einem im wesentlichen linearen bis verzweigten Polymeren so copolymerisiert, dass im wesentlichen nur die genannte(n) weitere(n) reaktive(n) Gruppe(n) der Epoxid-Verbindung an der Polymerisation teilnehmen, wodurch freie Epoxygruppen erhalten bleiben, und
c₁) das gemäss b₁) erhaltene Polymer an das gemäss a₁) erhaltene Polymer anpolymerisiert (aufgraftet),
wobei die Polymerisation gemäss a₁) oder gemäss b₁) oder beide Polymerisationen in Gegenwart eines oder mehrerer Lichtschutzmittel durchgeführt werden und wobei die Lichtschutzmittel in beiden Polymerisationsschritten gleich oder verschieden sein können und die Gesamtmenge an Lichtschutzmittel 0,1 bis 30 Gew.-%, bezogen auf die Monomeren in beiden Polymerisationsschritten, beträgt, und wobei die Polymerisation a₁) ganz oder teilweise in Gegenwart des gemäss b₁) gebildeten Polymeren erfolgen kann. Die im Absatz nach der Beschreibung der ersten bevorzugten Ausführungsform des Verfahrens gemachten Bemerkungen gelten sinngemäss. Auf diese Weise werden Polymermikropartikel erhalten, die nur im "amphipathischen Dispersionsmittel" (in den Polymerketten) Lichtschutzmittel enthalten.

Die Polymerisation als solche kann in an sich bekannter Weise, z.B. gemäss der EP-A 3166, EP-A 119 051, US-A 4,290,932, DE-A 2,818,102, GB-A 1,156,012 und den darin enthaltenen Literaturzitaten, durchgeführt werden.

Lichtstabilisierte Mikropartikel, die im wesentlichen durch Additionspolymerisation gebildet werden, können z.B. gemäss der EP-A 119 051 bzw. US-A 4,290,932 durch Emulsionspolymerisation erhalten werden, indem man eine geeignete Auswahl ethylenisch ungesättigter Monomeren (einschliesslich ethylenisch ungesättigter Epoxide) in Gegenwart einer weiter unten definierten Menge eines oder mehrerer Lichtschutzmittel(s) in Wasser polymerisiert. Das Wasser kann anschliessend z.B. durch azeotrope Destillation entfernt werden.

Bevorzugt ist die Herstellung der erfindungsgemässen Mikropartikel nach einem Verfahren der Dispersionspolymerisation, wie es z.B. die EP-A 3166 oder GB-A 1,156,012 offenbart.

Hierbei wird z.B. eine Auswahl geeigneter Monomerer in Gegenwart einer weiter unten definierten Menge eines oder mehrerer Lichtschutzmittel(s) in einem organischen Lösungsmittel, in dem das (die) Lichtschutzmittel und die Monomeren nach Möglichkeit löslich, das entstehende Copolymer jedoch unlöslich sind, polymerisiert. Es kann vorkommen, dass das (die) verwendete(n) Lichtschutzmittel oder die den Kondensationspolymermikroteilchen zugrunde liegenden Monomeren in der Flüssigkeit, in der die Polymerisation ausgeführt werden soll, nur wenig löslich sind. Dann besteht die erste Stufe der Dispersationspolymerisation darin, das Lichtschutzmittel oder die betreffenden Monomeren mit Hilfe eines Dispergiermittels in den Zustand einer kolloidalen Dispersion in der inerten Flüssigkeit zu bringen.

Besonders bevorzugt ist die Herstellung der lichtstabilisierten Polymermikropartikel gemäss der EP-A 3166, wobei der Teilchenbildung die Herstellung eines amphipathischen Dispergiermittels, welches eine Komponente aufweist, die durch die anwesende organische Flüssigkeit solvatisiert ist und daneben eine weitere Komponente enthält, mit der es an den Polymermikroteilchen verankert werden kann, vorausgeht (Schritt b₁) oben). Geeignete Monomere werden dann vorteilhaft in Gegenwart eines inerten Verdünnungsmittels und des in situ hergestellten amphipathischen Dispergiermittels polymerisiert, wobei letzteres vor, während oder nach der Polymerisation gemäss Schritt a₁) zugegeben werden kann. Die Mikropartikel können gegebenenfalls anschliessend aus der resultierenden Dispersion z.B. durch Spritztrocknen oder Gefriertrocknen abgetrennt werden.
Die Verankerung des amphipathischen Dispergiermittels an die Polymermikropartikel kann physikalischer oder chemischer Natur sein, wobei es bevorzugt ist, dass das Dispergiermittel chemisch an die Mikropartikel gebunden ist.
Geeignete amphipathische Dispergiermittel sowie deren Herstellung werden z.B. in der EP-A 3166 beschrieben.

Das (die) Lichtschutzmittel wird (werden) der zu polymerisierenden Monomerenmischung in einer Menge von 0,1 bis 30 Gew.-% und bevorzugt 0,5 bis 10,0 Gew.-%, jeweils bezogen auf die Monomeren, zugegeben. Die Zugabe kann zu Beginn, gemeinsam mit den Monomeren, kontinuierlich während, oder gegen Ende des Polymerisations-/Polykondensationsvorganges erfolgen. So wird eine gleichmässige Verteilung des (der) Lichtschutzmittel(s) in den Mikropartikeln bzw. eine Anreicherung in den äusseren Schichten erreicht. Dadurch wird gewährleistet, dass das (die) Lichtschutzmittel je nach seiner (ihrer) Natur physikalisch oder chemisch in den resultierenden Polymermikropartikel verankert ist. Bevorzugt weist das Lichtschutzmittel reaktive Gruppen, z.B. Hydroxy-, Carboxy-, Ester-, Epoxy-, Amino- oder Amidgruppen oder ethylenische Doppelbindungen, z.B. in (Meth)acrylat-oder Vinylgruppen, auf, mit deren Hilfe es chemisch an das Polymer gebunden werden kann und gegebenenfalls direkt an der Polymerisation teilnehmen kann.

Ein weiterer Gegenstand der Erfindung sind Dispersionen, die die erfindungsgemässen Polymermikropartikel enthalten. Für praktische Zwecke werden die Mikropartikel nicht als solche isoliert, sondern werden in dem Lösungsmittel, in dem die Polymerisation stattfand, als Dispersion weiterverarbeitet. Als Lösungsmittel kommen insbesondere aromatische, aliphatische und cycloaliphatische Kohlenwasserstoffe, aber auch andere, z.B. Wasser, in Betracht. Beispiele für Kohlenwasserstoffe sind Benzol, Toluol und vor allem höher siedende aliphatische Kohlenwasserstofffraktionen, z.B. mit einem Siedebereich von 100-200°C. Die erfindungsgemässen Dispersionen enthalten die Mikropartikel z.B. in einer Menge von 10 bis 90 %, insbesondere 20 bis 80 % z.B. 40 bis 80 %, bezogen auf die Dispersion.

Ein weiterer Gegenstand der Erfindung ist eine Beschichtungszusammensetzung, in der das filmbildende Material
a) 1 bis 95 Vol-% einer dispersen Phase, die erfindungsgemässe Mikropartikel enthält und
b) 99 bis 5 Vol-% einer flüssigen kontinuierlichen Phase mit einer Viskosität von 10 bis 3000 mPa.s (0,1 bis 30 Poise) bei Raumtemperatur, die dazu fähig ist, mit der dispersen Phase in ein filmbildendes Polymer zu härten, enthält, wobei das Gesamtvolumen von a) und b) 100 % beträgt und die disperse Phase an der Lackhärtung teilnimmt. Die Phase b) kann dabei ebenfalls ein oder mehrere Lichtschutzmittel enthalten. Die disperse Phase enthält vorzugsweise mindestens 15, z.B. 30, vorzugsweise 50 Vol-% Mikropartikel.

Bevorzugt sind Beschichtungszusammensetzungen, in denen das filmbildende Material 5 bis 85, z.B. 15-85, Vol-% der dispersen Phase, die mindestens 50 Vol-% erfindungsgemässe Mikropartikel enthält, und 95-15, z.B. 85-15, Vol-% der flüssigen kontinuierlichen Phase, die bei Raumtemperatur eine Viskosität von 0,1 bis 20 Poise aufweist, enthält.

Generell können dabei die Mikropartikel entweder wie ein Additiv einem fertigen Lack zugesetzt werden; oder sie können an Stelle eines entsprechenden Anteils der Lackkomponenten, z.B. der Acrylat- oder Polyesterkomponente eines Lackes, eingesetzt werden. So können die Mikropartikel auch an der Härtung des Lackes teilnehmen (als reaktive Komponente).

Der grundsätzliche Aufbau solcher Beschichtungszusammensetzungen geht z.B. aus der EP-A 3166, EP-A 119 051, US-A 4,290,932, DE-A 2,818,102 oder GB-A 1,156,012 hervor. Die Teilchen der dispersen Phase besitzen vorzugsweise eine Grösse oder Grössenverteilung im Bereich von 0,1 bis 20 µm.

Die disperse Phase kann ausschliesslich aus Polymermikroteilchen bestehen; bevorzugt enthält die disperse Phase jedoch ausser den Mikropartikeln und gegebenenfalls Lösungsmittel noch Pigment-, Füllstoff und/oder Streckmittelteilchen, wie diese üblicherweise in Beschichtungszusammensetzungen verwendet werden. Diese Teilchen weisen mit Vorteil eine in der Beschichtungstechnik übliche Grösse von z.B. 0,1 bis 5 µm auf.

Die Polymermikroteilchen, Pigment-, Füllstoff- und/oder Streckmittelteilchen sind zweckmässig in einem entflockten Zustand in der flüssigen kontinuierlichen Phase stabil dispergiert, was z.B. mit Hilfe bekannter Pigmentdispergiermittel erreicht werden kann. Alternativ kann das flüssige filmbildende Material in der kontinuierlichen Phase oder eine chemische Variante davon selbst ein wirksames Dispergiermittel sein.

Die Dispergierung des Pigments kann in der in der Beschichtungstechnik üblichen Weise z.B. unter Verwendung von Kugelmühlen, Perlmühlen, Reibemühlen oder Kolloidalmühlen erfolgen.

Wie schon erwähnt, ist es bevorzugt, die erfindungsgemässen lichtstabilisierten Mikropartikel gemäss der EP-A 3166 in einer inerten Flüssigkeit und in Gegenwart eines amphipatischen Dispergiermittels herzustellen, wobei eine stabile Dispersion der Polymermikroteilchen entsteht. Pigment-, Füllstoff- und/oder Streckmittelteilchen können in dieser Dispersion durch Reste des amphipathischen Dispergiermittels ebenfalls stabilisiert werden. Die auf diese Weise erhaltene disperse Phase kann anschliessend mit der kontinuierlichen Phase zu einer Beschichtungszusammensetzung vereinigt werden. Für nähere Einzelheiten hierzu sei auf die EP-A 3166 verwiesen.

Ein Vorteil der Verwendung der erfindungsgemässen Mikropartikel besteht darin, dass die disperse Phase in der Lage ist, an der Lackhärtung teilzunehmen, da sie freie reaktive Epoxygruppen enthalten. Sie können zusätzlich auch noch andere reaktive Gruppen enthalten, wenn für die Polymerisation entsprechende Monomere eingesetzt wurden. Gegebenenfalls kann auch der Dispergiermittelteil noch reaktive Gruppen enthalten, z.B. Hydroxy- oder Carboxygruppen, die sich im solvatisierten Polymerteil oder in dem Teil des Moleküls, der als Ankerkomponente für die Mikropartikel dient, befinden können.

Auf Grund der im vorstehenden Absatz beschriebenen Gegebenheiten bildet das System disperse Phase/kontinuierliche Phase ein Zweikomponentensystem, d.h. dass die Filmbildung mindestens zum Teil durch Reaktion der beiden Phasen miteinander zustande kommt.

Ein Beispiel für ein entsprechendes amphipathisches Dispergiermittel ist ein Propfcopolymer, welches durch Copolymerisation von Methylmethacrylat, Methacrylsäure und dem Glycidylmethacrylat-Addukt des Copolyesters aus 12-Hydroxystearinsäure und Dimethylolpropionsäure erhältlich ist. Weitere Beispiele für geeignete Dispergiermittel werden in der EP-A 3166 gegeben.

Bei der Komponente b) der erfindungsgemässen Beschichtungszusammensetzungen handelt es sich um die flüssige kontinuierliche Phase, welche in der Lage ist, mittels Additions- bzw. Kondensationspolymerisation zu einem Polymerfilm zu härten.

Unter Kondensationspolymerisation soll hierbei insbesondere die Polymerisation mittels Reaktion von Paaren von funktionellen Gruppen unter Bildung von funktionellen Einheiten, welche in den Monomeren nicht anwesend sind, verstanden werden, wobei die Reaktion gegebenenfalls mit der Entwicklung von niedermolekularen Beiprodukten verbunden sein kann (siehe EP-A 3166).

Als Bestandteile der kontinuierlichen Phase eignen sich insbesondere härtbare oder duroplastische Harze, die mittels Erhitzen und/oder Zugabe eines Katalysators in ein filmbildendes Polymer verwandelt werden können. Beispiele für solche Harze sind:
1. Phenol-Formaldehyd-Harze, das Produkt der Umsetzung von Phenolen mit Formaldehyd.
2. Amino-Formaldehyd-Harze, z.B. Harnstoff-Formaldehyd- oder Melamin-Formaldehyd-Harze, erhältlich durch Reaktion von Harnstoff, Melamin oder anderen stickstoffhaltigen Verbindungen mit Formaldehyd.
3. Vernetzbare Acrylharze, die sich von substituierten Acrylsäureestern wie z.B. Epoxyacrylaten, Urethanacrylaten oder Polyesteracrylaten ableiten. Ferner Acrylharze, die keine olefinische Doppelbindung aufweisen, deren OH- oder/und COOH-Gruppen an der Kondensationsreaktion teilnehmen können.
4. Polyester- und Alkydharze.
5. Polyurethan-Harze, die auf der Reaktion von Di- oder Polyisocyanaten mit Polyhydroxyverbindungen basieren.
6. Epoxidharze, z.B. solche, die durch Reaktion von Epichlorhydrin mit Bisphenol A erhalten werden.

Die kontinuierliche Phase kann prinzipiell aus einer einzigen flüssigen Substanz oder aus einem homogenen flüssigen Gemisch aus zwei oder mehreren Substanzen bestehen.

Bevorzugt ist ein Gemisch von zwei oder mehreren Substanzen, wobei dieses in Form eines Einkomponenten- oder Zweikomponentensystems vorliegen kann.

Handelt es sich bei der kontinuierlichen flüssigen Phase um ein Einkomponentensystem, so enthält diese die filmbildenden Bestandteile in lagerstabiler Form und die Härtung kann z.B. durch blosses Erhitzen erfolgen oder es wird ein Härter zugegeben.

Geeignete Einkomponenten-Systeme sind z.B. aus einem der genannten duroplastischen Harze und gegebenenfalls einer weiteren flüssigen Substanz, dem sogenannten Reaktivverdünner, der reaktive Gruppen enthält, mit deren Hilfe er an der Härtung des filmbildenden Materials teilnehmen kann, und der vor allem zur besseren Flexibilität des Lackfilms beiträgt, aufgebaut. Bei dem Reaktivverdünner handelt es sich beispielsweise um bifunktionelle Monomere oder Oligomere mit Molekulargewichten bis etwa 1000, die insbesondere OH-Gruppen, z.B. 2-6, enthalten. Beispiele hierfür sind einfache Glykole oder Polyole wie Butan-1,4-diol, insbesondere aber hydroxy-terminierte oligomere Ester von Polyalkoholen mit Polycarbonsäuren und/oder Monocarbonsäuren. Beispiele für geeignete Reaktivverdünner sind aus der EP-A 3166 ersichtlich.

Handelt es sich bei der kontinuierlichen flüssigen Phase um ein Zwei-Komponenten-System, so wird dieses erst kurz vor der Anwendung der fertigen Beschichtungszusammensetzung hergestellt, indem man zwei flüssige Komponenten, die wechselseitig reaktiv und ausserdem in der Lage sind, einen Film zu bilden, zusammenbringt.

Die zweite Komponente kann hierbei mit der ersten Komponente coreagieren und so einen gehärteten Film bilden, wie es z.B. bei Zweikomponenten-Polyurethan-Lacken der Fall ist. Bei der zweiten Komponente kann es sich jedoch auch um einen Katalysator für die Härtungsreaktion der ersten Komponente handeln, wofür die säurekatalysierte Härtung von Aminoharzen ein Beispiel ist.

Erfindungsgemäss bevorzugte Beschichtungszusammensetzungen sind solche auf Basis eines vernetzbaren Acrylat-, Polyester/Alkyd- oder Polyurethan-Harzes, das gegebenenfalls mit Aminoplasten, Polyepoxiden oder Polyisocyanat vernetzt ist.

Die erfindungsgemässen Beschichtungszusammensetzungen können in der kontinuierlichen Phase einen Katalysator für die Lackhärtung aufweisen, der je nach Natur des verwendeten filmbildenden Materials bevorzugt in einer Menge von 0,1 bis 15 Gew.-%, bezogen auf die gesamte kontinuierliche Phase inklusive eines gegebenenfalls anwesenden Reaktivverdünners, zugegeben wird.

Besteht die kontinuierliche Phase in der Hauptsache aus duroplastischen Harzen, handelt es sich bei dem Katalysator bevorzugt um einen sauren oder bei Erhitzen Säure abspaltenden Katalysator, z.B. Methansulfonsäure, Toluolsulfonsäure, Phosphorsäure, Halbester der Maleinsäure, Cyclohexylphosphonigsäure, Trichloressigsäure, Trifluoressigsäure, Tetrahalogenphthalsäure und deren Halbester.

Die erfindungsgemässen Beschichtungszusammensetzungen können zusätzlich zu den filmbildenden Komponenten, der dispersen Phase und der flüssigen kontinuierlichen Phase, ein inertes flüssiges Verdünnungsmittel enthalten, z.B. bis zu 50, insbesondere 30 Vol-%, welches sich unter den Bedingungen des Aufbringens der Beschichtungszusammensetzung auf ein Substrat verflüchtigt.

Beispiele für geeignete inerte Lösungsmittel sind aromatische und aliphatische Kohlenwasserstoffe, halogenierte Kohlenwasserstoffe und Carbonsäureester.

Es kann wünschenswert sein, der Beschichtungszusammensetzung weitere Stoffe zuzugeben, die bestimmte Eigenschaften, z.B. das Fliessvermögen oder die Adhäsion auf einem Substrat beeinflussen. Solche Additive, die im allgemeinen der kontinuierlichen Phase zugegeben werden, sind dem Fachmann bekannt.

Vorzugsweise besteht das filmbildende Material in den erfindungsgemässen Beschichtungszusammensetzungen aus 10 bis 80, z.B. 20-80, Vol-% disperser Phase und 90 bis 20, z.B. 80-20, Vol-% flüssiger kontinuierlicher Phase.

Die Aufbringung der erfindungsgemässen Beschichtungszusammensetzungen auf ein Substrat kann mit Hilfe aller herkömmlichen Verfahren geschehen, die dem Fachmann bekannt sind, z.B. durch Streichen, Besprühen, Tauchen oder elektrophoretisches Auftragen. Die Beschichtungen und Lacke auf Basis der erfindungsgemässen Zusammensetzungen werden nach dem Auftragen getrocknet und eingebrannt.

Die Verwendung der erfindungsgemässen Beschichtungszusammensetzungen ist für alle Arten der industriellen Lackierung geeignet, wie z.B. für die Lackierung von Maschinen, Fahrzeugen, Schiffen oder Konstruktionsteilen. Von besonderer Bedeutung ist sie für die Fahrzeug-Lackierung. Hierbei kann es sich sowohl um Einschicht-Lackierung wie Mehrschicht-Lackierung handeln.

Beschichtungen und Lacke auf Basis der erfindungsgemässen Beschichtungszusammensetzung zeichnen sich durch eine erhöhte Bewitterungsbeständigkeit, insbesondere eine besonders hohe Lichtstabilität aus.

Ein weiterer Gegenstand der Erfindung ist die Verwendung von erfindungsgemässen lichtstabilisierten Mikropartikeln als Bestandteil von Beschichtungszusammensetzungen.

In der im erfindungsgemässen Verfahren anfallenden Dispersion, die die erfindungsgemässen Polymermikropartikel enthält, fallen neben den eigentlichen Mikropartikeln, die den geforderten Spezifikationen (Grössenverteilung 0,01-20 µm und Vernetzung) entsprechen, auch noch andere Anteile von Polymeren an, die keine Mikropartikel im obigen Sinn sind. Diese stören bei der Verwendung in Lackzusammensetzungen nicht, weshalb die erhaltenen Dispersionen in der Regel direkt eingesetzt werden können. Die Mikropartikel als solche können bei Bedarf aber auch isoliert bzw. von anderen Polymeranteilen gereinigt werden. Letzteres kann beispielsweise durch Umfällen in geeigneten Lösungsmitteln erfolgen, in denen die nicht vernetzten Anteile löslich sind. Man erhält auf diese Weise gereinigte Mikropartikel-Dispersionen, aus denen die Partikel selbst durch geeignete, an sich bekannte Methoden, z.B. durch Spritztrocknen, vor allem aber Gefriertrocknen, isoliert werden können. Die isolierten Mikropartikel können dann ebenfalls durch in der Polymerchemie übliche Methoden charakterisiert werden, z.B. mittels Lichtstreuungsmessungen, Rasterelektronenmikroskopie, Feststellung der Grössenverteilung, der Form usw. Wie bereits früher erwähnt, weisen die Mikropartikel eine im Idealfall kugel- bis eiförmige Gestalt auf. Isolierung und Charakterisierung von Polymermikropartikeln sind in der Literatur vielfach beschrieben, so z.B. von Funke et al., Progr. Colloid Polymer Sci. 57, 48-53 (1975).

Die nachfolgenden Beispiele dienen der weiteren Erläuterung der verschiedenen Aspekte der vorliegenden Erfindung, stellen jedoch keine wie immer geartete Einschränkung des allgemein anwendbaren Prinzips der vorliegenden Erfindung dar. In den Beispielen beziehen sich, ebenso wie in der gesamten übrigen Beschreibung, Teile und Prozente auf das Gewicht, sofern nichts anderes angegeben ist. In den Herstellungsbeispielen 1 bis 8 ist die Isolierung der Mikropartikel als solche der Einfachheit halber nicht erwähnt. Sie kann in der vorstehend ausführlich beschriebenen Weise erfolgen.

### Beispiel 1

### A. Herstellung eines amphipathischen Dispersionsmittels

### I. Herstellung eines 12-Hydroxystearinsäure/Dimethylolpropionsäurecopolyesters

In einen 2,5 l Sulfierkolben, der mit Rührer, Wasserabscheider und Stickstoffeinleitung ausgerüstet ist, gibt man 1350 g 12-Hydroxystearinsäure und 100,5 g 2,2-Bis(hydroxymethyl)propionsäure sowie 145 g eines Alkangemisches (Siedebereich 180-220°C) und 3 g Methansulfonsäure als Katalysator. Das Reaktionsgemisch wird nun auf 156°C erhitzt, wobei während 6 Stunden ca. 78 g H₂O abgeschieden werden (Lösung A₁).

### II. Herstellung eines Glycidylmethacrylat-Adduktes von I

500 g der erhaltenen Lösung A₁ werden in einem mit N₂-Einleitung und Rückflusskühler versehenen 1,5 l-Sulfierkolben mit 46,5 g Methacrylsäureglycidylester, 1,5 g Dimethyl-aminododekan, 0,5 g Hydrochinon und 20 g Alkangemisch (Siedebereich 180-220°) sechs Stunden am Rückfluss erhitzt (Lösung B₁).

### III. Copolymerisation

In einem 1,5 l-Sulfierkolben mit Rückflusskühler und N₂-Einleitung werden 375 g Methyl-ethyl-keton vorgelegt und auf Rückfluss (80°C) erhitzt. Dazu tropft man während 2 Stunden folgende Mischung:
213,5 g der Lösung B₁ (erhalten gemäss II)
184 g Methacrylsäuremethylester
20,5 g Methacrylsäure
2,15 g Azodiisobutyronitril
2,15 g n-Octylmercaptan

Nachdem die ganze Lösung zugetropft ist, gibt man nochmals 0,3 g Azodiisobutyronitril hinzu und kocht die Lösung während weiteren 2 Stunden am Rückfluss. Danach verdünnt man die Lösung mit 580 g ®Solvesso 100 (Alkangemisch: Siedebereich 162-177°C) und destilliert ca. 40 g Lösungsmittelgemisch ab. Man erhält eine Lösung mit einem Festkörpergehalt von ca. 30 % (= Lösung C₁).

### B. Herstellung einer lichtstabilisierten Polymethacrylat-Mikropartikel-Dispersion mit freien Epoxygruppen in den Mikropartikeln

In einen 1,5 l Sulfierkolben, ausgerüstet mit Thermometer, Rührer, Rückflusskühler, Stickstoffüberleitung und Tropftrichter, gibt man 284 ml ®Solvesso 100 (Alkangemisch, d = 0,85, Sdp. 162-177°C) und 464 ml Xylol. Man erhitzt das Gemisch auf Rückflusstemperatur (ca. 94°C) unter Stickstoff. Dazu gibt man auf einmal ein Gemisch bestehend aus
19,4 g Methylmethacrylat
0,4 g Methacrylsäure
7,2 g der Lösung C₁
1,6 g Azodiisobutyronitril
und rührt während 30 Minuten am Rückfluss (1. Polymerisationsstufe). Zu dieser klaren Lösung lässt man immer noch unter Rückfluss innerhalb von 3 Stunden folgendes Gemisch zutropfen:
330,4 g Methylmethacrylat
3,8 g Methacrylsäure
56,9 g Glycidylmethacrylat
5,0 g Azodiisobutyronitril
0,8 g Dimethylaminoethanol
67,6 g der Lösung C₁
9,0 g 4-Acryloyloxy-1,2,2,6,6-pentamethylpiperidin

(2. Polymerisationsstufe). Mit dem Fortschreiten der Reaktion nimmt die Viskosität des Reaktionsgemisches zu. Nach dem Zutropfen wird während 10 Minuten bei 95°C weitergerührt und auf Raumtemperatur abgekühlt. Man erhält so eine homogene, hochviskose Polymethacrylat-Mikropartikel-Dispersion mit einem Feststoffgehalt von ca. 40 %, die ca. 2 % Lichtschutzmittel (4-Acryloyloxy-1,2,2,6,6-pentamethylpiperidin), bezogen auf den gesamten Festkörpergehalt, enthält (= Dispersion D₁).

### Beispiel 2

A. In einen 1,5 l Sulfierkolben, ausgerüstet mit Thermometer, Rührer, Rückflusskühler und Stickstoffüberleitung gibt man 375 ml Methylethylketon und erhitzt auf Rückflusstemperatur (ca. 80°C). Dazu tropft man innerhalb von 2 Stunden eine Lösung bestehend aus
   184,0 g Methylmethacrylat
   20,5 g Methacrylsäure
   213,5 g der Lösung B₁, erhalten nach Beispiel 1, AII
   2,15 g Azodiisobutyronitril
   2,15 g n-Octylmercaptan
   10,4 g 4-Acryloyloxy-1,2,2,6,6-pentamethylpiperidin
   Nachdem die ganze Lösung zugetropft ist, gibt man nochmals 0,3 g Azodiisobutyronitril hinzu und kocht die Lösung während weiteren 2 Stunden am Rückfluss. Danach verdünnt man die Lösung mit 580 g ®Solvesso 100 (Alkangemisch, Siedebereich 162-177°C) und destilliert ca. 40 g Lösungsmittelgemisch ab. Man erhält eine Lösung mit einem Festkörpergehalt von ca. 30 %. Der Gehalt an Lichtschutzmittel (4-Acryloyloxy-1,2,2,6,6-pentamethylpiperidin) beträgt ca. 2,5 %, bezogen auf den Festkörpergehalt (Lösung C₂).
B. Es wird genau wie in Beispiel 1 verfahren, mit dem einzigen Unterschied, dass in Schritt B an Stelle der Lösung C₁ die gleiche Menge der Lösung C₂ eingesetzt wird. Man erhält so eine homogene, hochviskose Polymethacrylat-Mikropartikel-Dispersion mit einem Feststoffgehalt von ca. 40 %, die ca. 2,1 % Lichtschutzmittel, bezogen auf den gesamten Festkörpergehalt, enthält (=Dispersion D₂).

### Beispiel 3:

Beispiel 1B wird wiederholt, wobei jedoch an Stelle der Lösung C₁ die gleiche Menge an Lösung C₂ verwendet wird und die 9,0 g 4-Acryloyloxy-1,2,2,6,6-pentamethylpiperidin weggelassen werden. Man erhält so ebenfalls eine homogene, viskose Polymethacrylat-Mikropartikeldispersion mit einem Feststoffgehalt von ca. 40 %, die ca. 0,1 % Lichtschutzmittel (4-Acryloyloxy-1,2,2,6,6-pentamethylpiperidin), bezogen auf den gesamten Festkörpergehalt, enthält (=Dispersion D₃).

### Beispiel 4:

In einem 1,5 l Sulfierkolben, ausgerüstet mit Thermometer, Rührer, Rückflusskühler, Stickstoffüberleitung und Tropftrichter, gibt man 284 ml ®Solvesso 100 (Alkangemisch, d = 0,85, Sdp. 162-177°C) und 464 ml Xylol. Man erhitzt das Gemisch auf 95°C. Dazu gibt man eine Lösung bestehend aus
19,4 g Methylmethacrylat
0,4 g Methacrylsäure
1,6 g Azodiisobutyronitril
7,2 g der Lösung C₁ (erhalten nach Beispiel 1, A)
Man rührt während 30 Minuten bei 55°C. Zu der klaren Lösung lässt man bei 95°C während 3 Stunden folgende Lösung zutropfen:
330,4 g Methylmethacrylat
3,8 g Methacrylsäure
56,9 g Glycidylmethacrylat
5,0 g Azodiisobutyronitril
67,6 g der Lösung C₁ (erhalten nach Beispiel 1, A)
0,8 g Dimethylaminoethanol
9,0 g 2-{2-Hydroxy-3-tert-butyl-5-[2-(2-acryloyloxycyclohexyloxycarbonyl)-ethyl]-phenyl}-benztriazol
Mit zunehmender Dauer des Zutropfens wird das Reaktionsgemisch viskoser. Nach dem Zutropfen wird während 10 Minuten bei 95°C weitergerührt und dann auf Raumtemperatur abgekühlt. Man erhält so eine homogene, hochviskose Polymethacrylat-Mikropartikel-Dispersion mit einem Festkörpergehalt von ca. 40 %, die 2 % des Benztriazol-Lichtschutzmittels, bezogen auf den gesamten Festkörpergehalt, enthält (= Dispersion D₄).

### Beispiel 5

A. In einem 1,5 l Sulfierkolben, ausgerüstet mit Thermometer, Rührer, Rückflusskühler und Stickstoffüberleitung gibt man 375 ml Methylethylketon und erhitzt auf Rückflusstemperatur (ca. 80°C). Dazu tropft man innerhalb von 2 Stunden eine Lösung bestehend aus
   184,0 g Methylmethacrylat
   20,5 g Methacrylsäure
   213,5 g der Lösung B₁, erhalten nach Beispiel 1, AII
   2,15 g Azodiisobutyronitril
   2,15 g n-Octylmercaptan
   10,4 g 2-{2-Hydroxy-3-tert-butyl-5-[2-(2-acryloyloxycyclohexyloxy-carbonyl)-ethyl]-phenyl}-benztriazol
   Nachdem die ganze Lösung zugetropft ist, gibt man nochmals 0,3 g Azodiisobutyronitril hinzu und kocht die Lösung während weiteren 2 Stunden am Rückfluss. Danach verdünnt man die Lösung mit 580 g ®Solvesso 100 (Alkangemisch, Siedebereich 162-177°C) und destilliert ca. 44 g Lösungsmittelgemisch ab. Man erhält eine Lösung mit einem Festkörpergehalt von ca. 30 %. Der Gehalt an Lichtschutzmitttel (Benztriazol-UV-Absorber) beträgt ca. 2,5 %, bezogen auf den Festkörpergehalt (= Lösung C₃).
B. Es wird genau wie in Beispiel 4 verfahren, mit dem einzigen Unterschied, dass an Stelle der Lösung C₁ eine gleiche Menge der Lösung C₃ verwendet wird. Man erhält so eine homogene, viskose Polymethacrylat-Mikropartikeldispersion mit einem Festkörpergehalt von ca. 40 %, die ca. 2,1 % Lichtschutzmittel (Benztriazol-UV-Absorber), bezogen auf den gesamten Festkörpergehalt, enthält (= Dispersion D₅).

### Beispiel 6:

Man verfährt wie in Beispiel 4 beschrieben, setzt jedoch an Stelle der Lösung C₁ die gleiche Menge der Lösung C₃ ein und lässt die 9,0 g 2-{2-Hydroxy-3-tert-butyl-5-[2-(2-acryloyloxycyclohexyloxycarbonyl)-ethyl]-phenyl}-benztriazol weg. Man erhält so eine homogene, viskose Polymethacrylat-Mikropartikeldispersion, die in den Mikropartikeln freie Epoxygruppen enthält, mit einem Festkörpergehalt von ca. 40 %, die ca. 0,1 % Benztriazol-UV-Absorber, bezogen auf den gesamten Festkörpergehalt, enthält (= Dispersion D₆).

### Beispiel 7:

Verfährt man wie in Beispiel 1B beschrieben, verwendet aber an Stelle der Lösung C₁ die Lösung C₃, so erhält man ebenfalls eine viskose, homogene Polymethacrylat-Mikropartikeldispersion, wobei die Mikropartikel freie Epoxygruppen enthalten, mit einem Festkörpergehalt von ca. 40 %, die ca. 2,1 % Lichtschutzmittel (0,1 % Benztriazol-UV-Absorber und ca. 2 % 4-Acryloyloxy-1,2,2,6,6-pentamethylpiperidin), bezogen auf den gesamten Festkörpergehalt, enthält (= Dispersion D₇).

### Beispiel 8:

Man verfährt wie im Beispiel 4 beschrieben, setzt jedoch an Stelle der Lösung C₁ die Lösung C₂ ein. Man erhält so ebenfalls eine viskose, homogene Polymethacrylat-Mikropartikeldispersion, worin die Mikropartikel freie Epoxygruppen enthalten, mit einem Festkörpergehalt von ca. 40 %, die ca. 2,1 % Lichtschutzmittel (ca. 0,1 % 4-Acryloyloxy-1,2,2,6,6-pentamethylpiperidin und ca. 2 % 2-{2-Hydroxy-3-tert-butyl-5-[2-(2-acryloyloxycyclohexyloxycarbonyl)-ethyl]-phenyl}-benztriazol), bezogen auf den gesamten Festkörpergehalt, enthält (=Dispersion D₈).

### Beispiel 9

A. Es wird genau wie in Beispiel 2A verfahren, mit dem einzigen Unterschied, dass an Stelle der dort eingesetzten 10,4 g 4-Acryloyloxy-1,2,2,6,6-pentamethylpiperidin 250,5 g eingesetzt werden. Man erhält eine Lösung mit einem Festkörpergehalt von ca. 30 %. Der Gehalt an Lichtschutzmittel (4-Acryloyloxy-1,2,2,6,6-pentamethylpiperidin) beträgt ca. 38 %, bezogen auf den Festkörpergehalt (=Lösung C₄).
B. Beispiel 1B wird wiederholt, wobei jedoch an Stelle der Lösug C₁ die gleiche Menge an Lösung C₄ verwendet wird und die 9.0 g 4-Acryloyloxy-1,2,2,6,6-pentamethylpiperidin weggelassen werden. Man erhält eine homogene, viskose Polymethacrylat-Mikropartikel-Dispersion mit einem Feststoffgehalt von ca. 40 %, die ca. 3 % Lichtschutzmittel (4-Acryloyloxy-1,2,2,6,6-pentamethylpiperidin), bezogen auf den gesamten Festkörpergehalt, enthält (= Dispersion D₉).

### Beispiel 10

A. Es wird genau wie in Beispiel 5A verfahren, mit dem einzigen Unterschied, dass an Stelle der dort eingesetzten 10,4 g 2-{2-Hydroxy-3-tert.-butyl-5-[2-(2-acryloyloxycyclohexyloxy-carbonyl)-ethyl]-phenyl}-benztriazol 250,5 g eingesetzt werden. Man erhält eine Lösung mit einem Festkörpergehalt von ca. 30 %. Der Gehalt an Lichtschutzmittel (Benztriazol-UV-Absorber) beträgt ca. 38 %, bezogen auf den Festkörpergehalt (= Lösung C₅).
B. Man verfährt wie in Beispiel 4 beschrieben, setzt jedoch an Stelle der Lösung C₁ die gleiche Menge der Lösung C₅ ein und lässt die 9,0 g 2-{2-Hydroxy-3-tert.-butyl-5-[2-(2-acryloyloxycyclohexyloxy-carbonyl)-ethyl]-phenyl}-benztriazol weg. Man erhält so eine homogene, viskose Polymethacrylat-Mikropartikel-Dispersion mit einem Festkörpergehalt von ca. 40 %, die ca. 3 % Benztriazol-UV-Absorber, bezogen auf den gesamten Festkörpergehalt, enthält (= Dispersion D₁₀).

### Beispiel 11:

In einem 1,5 l Sulfierkolben, ausgerüstet mit Thermometer, Rührer, Rückflusskühler, Stickstoffüberleitung und Tropftrichter erwärmt man 1000 ml Xylol unter Stickstoff auf 80°C. Dazu gibt man auf einmal ein Gemisch bestehend aus
19,4 g Methylmethacrylat
0,4 g Methacrylsäure
7,2 g der Lösung C₅, erhalten nach Beispiel 10A
1,2 g 4-Acryloyloxy-1,2,2,6,6-pentamethylpiperidin
1,6 g Azodiisobutyronitril
und rührt während 30 Minuten bei 80°C. Zu dieser klaren Lösung lässt man immer noch bei 80°C innerhalb von 90 Minuten folgendes Gemisch zutropfen:
330,4 g Methylmethacrylat
3,8 g Methacrylsäure
56,9 g Glydicylmethacrylat
67,6 g der Lösung C₅
12,4 g 4-Acryloyloxy-1,2,2,6,6-pentamethylpiperidin
5,0 g Azodiisobutyronitril
0,8 g Dimethylaminoethanol
Nach dem Zutropfen wird während 10 Minuten bei 80°C weitergerührt und anschliessend unter leichtem Vakuum ca. 120 g Lösungsmittel abdestilliert. Man erhält so eine homogene, viskose Polymethacrylat-Mikropartikel-Dispersion mit einem Feststoffgehalt von ca. 35 %, die ca. 3 % Benztriazol-UV-Absorber (gemäss Beispiel 10A) und ca. 3 % 4-Acryloyloxy-1,2,2,6,6-pentamethylpiperidin, bezogen jeweils auf den gesamten Festkörpergehalt, enthält (= Dispersion D₁₁).

### Beispiel 12:

In einem 1,5 l Sulfierkolben, ausgerüstet mit Thermometer, Rührer, Rückflusskühler, Stickstoffüberleitung und Tropftrichter erwärmt man 1000 ml Xylol unter Stickstoff auf 80°C. Dazu gibt man auf einmal ein Gemisch bestehend aus
19,4 g Methylmethacrylat
0,4 g Methacrylsäure
7,2 g der Lösung C₄, erhalten nach Beispiel 9A
1,2 g 2-{2-Hydroxy-3-tert.-butyl-5-[2-(2-acryloyloxycyclohexyloxycarbonyl)-ethyl]-phenyl}-benztriazol
1,6 g Azodiisobutyronitril
und rührt während 30 Minuten bei 80°C. Zu dieser klaren Lösung lässt man immer noch bei 80°C innerhalb von 90 Minuten folgendes Gemisch zutropfen:
330,4 g Methylmethacrylat
3,8 g Methacrylsäure
56,9 g Glycidylmethacrylat
67,6 g der Lösung C₄
12,4 g 2-{2-Hydroxy-3-tert.-butyl-5-[2-(2-acryloyloxycyclohexyloxycarbonyl)-ethyl]-phenyl}-benztriazol
5,0 g Azodiisobutyronitril
0,8 g Dimethylaminoethanol
Nach dem Zutropfen wird während 10 Minuten bei 80°C weitergerührt und anschliessend unter leichtem Vakuum ca. 120 g Lösungsmittel abdestilliert. Man erhält eine homogene, viskose Polymethacrylat-Mikropartikel-Dispersion mit einem Feststoffgehalt von ca. 35 %, die ca. 3 % Piperidin-Lichtschutzmittel gemäss Beispiel 9A und ca. 3 % Benztriazol-UV-Absorber (2-{2-Hydroxy-3-tert.-butyl-5-[2-(2-acryloyloxycyclohexyloxycarbonyl)-ethyl]-phenyl}-benztriazol), bezogen auf den gesamten Festkörpergehalt, enthält (= Dispersion D₁₂).

### Beispiel 13:

Man verfährt wie in Beispiel 12 beschrieben, mit dem einzigen Unterschied, dass die beiden Portionen 2-{2-Hydroxy-3-tert.-butyl-5-[2-(2-acryloyloxycyclohexyloxycarbonyl)-ethyl]-phenyl}-benztriazol von 1,2 g auf 4,4 g und von 12,4 g auf 44,8 g erhöht werden. Man erhält so eine homogene, viskose Polymethacrylat-Mikropartikel-Dispersion, die in den Mikropartikeln freie Epoxygruppen enthält, mit einem Feststoffgehalt von ca. 40 %, die ca. 3 % des Piperidin-Lichtschutzmittels und ca. 10 % des Benztriazol-UV-Absorbers, bezogen auf den gesamten Festkörpergehalt, enthält (= Dispersion D₁₃).

### Beispiel 14:

A. In einem 750 ml Sulfierkolben, ausgerüstet mit Thermometer, Rührer, Rückflusskühler, Tropftrichter und Stickstoffüberleitung erhitzt man 79,0 g Methylethylketon auf Rückflusstemperatur. Dazu tropft man innerhalb von 2 Stunden eine Lösung bestehend aus
   45,0 g der Lösung B₁, erhalten nach Beispiel 1, AII
   38,8 g Methylmethacrylat
   4,4 g Methacrylsäure
   33,4 g 2-{2-Hydroxy-3-tert.-butyl-5-[2-(2-acryloyloxycyclohexyloxycarbonyl)-ethyl]-phenyl}-benztriazol
   16,7 g 4-Acryloyloxy-1,2,2,6,6-pentamethylpiperidin
   0,5 g Azodiisobutyronitril
   0,5 g n-Octylmercaptan
   100,0 g Methylethylketon.
   Nachdem die ganze Lösung zugetropft ist, gibt man nochmals 0,1 g Azodiisobutyronitril zu und kocht die Lösung während weiteren 2 Stunden am Rückfluss. Man destilliert nun 100,0 g Methylethylketon ab, verdünnt den Kolbeninhalt mit 123 g Solvesso 100 (Alkangemisch, Siedebereich 162-177°C) und destilliert erneut ca. 10 g Lösungsmittel ab. Man erhält eine Lösung mit einem Festkörpergehalt von ca. 40 %. Der Gehalt an Benztriazol-UV-Absorber beträgt ca. 25 % und der an Piperidin-Lichtschutzmittel ca. 13 %, jeweils bezogen auf den Festkörpergehalt (= Lösung C₆).
B. In einem 1,5 l Sulfierkolben, ausgerüstet mit Thermometer, Rührer, Rückflusskühler, Stickstoffüberleitung und Tropftricher erwärmt man 1000 ml Xylol unter Stickstoff auf 80°C. Dazu gibt man auf einmal ein Gemisch bestehend aus
   19,4 g Methylmethacrylat
   0,4 g Methacrylsäure
   7,2 g der Lösung C₆
   2,8 g 2-{2-Hydroxy-3-tert.-butyl-5-[2-(2-acryloyloxycyclohexyloxycarbonyl)-ethyl]-phenyl}-benztriazol
   1,2 g 4-Acryloyloxy-1,2,2,6,6-pentamethylpiperidin
   1,6 g Azodiisobutyronitril
   und rührt während 30 Minuten bei 80°C. Zu dieser klaren Lösung lässt man immer noch bei 80°C innerhalb von 90 Minuten folgendes Gemisch zutropfen:
   330,4 g Methylmethacrylat
   3,8 g Methacrylsäure
   56,9 g Glycidylmethacrylat
   67,6 g der Lösung C₆
   31,6 g 2-{2-Hydroxy-3-tert.-butyl-5-[2-(2-acryloyloxycyclohexyloxycarbonyl)-ethyl]-phenyl}-benztriazol
   13,6 g 4-Acryloyloxy-1,2,2,6,6-pentamethylpiperidin
   5,0 g Azodiisobutyronitril
   0,8 g Dimethylaminoethanol
   Nach dem Zutropfen wird während 10 Minuten bei 80°C weitergerührt und anschliessend unter leichtem Vakuum ca. 120 g Lösungsmittel abdestilliert. Man erhält eine homogene, viskose Polymethacrylat-Mikropartikel-Dispersion mit einem Feststoffgehalt von ca. 40 %, die ca. 4 % Piperidin-Lichtschutzmittel und ca. 9 % Benztriazol-UV-Absorber, bezogen auf den gesamten Festkörpergehalt, enthält (= Dispersion D₁₄).

### Beispiel 15: Herstellung und Applikation einer härtbaren Ueberzugsmasse

Die freie Epoxygruppen enthaltenden Mikropartikeldispersionen D₁ bis D₁₄, wie sie nach den Beispielen 1 bis 14 erhalten werden, werden zu härtbaren Ueberzugsmassen verarbeitet. Zu diesem Zweck wird jede dieser Dispersionen mit einem funktionellen säuregruppenhaltigen Acrylatharz (Synocure® 8845 der Firma Cray Valley) in einem Verhältnis gemischt, das einem Festkörperverhältnis von 1:8 entspricht. Zu der Mischung werden als Verlaufshilfsmittel 1,1 %, bezogen auf das Acrylatharz, einer 20%igen Baysilon® A-Lösung und 0,55 %, bezogen auf das Acrylatharz, einer 1%igen Baysilon® A-Lösung als Verlaufshilfsmittel zugefügt.

Die erhaltene Lackmischung wird mit einem Gemisch von Xylol/Butylacetat (3:1) auf Spritzfähigkeit verdünnt und auf ein vorbereitetes Aluminiumblech (coil coat, Füller, silbermetallic Basislack) gespritzt und bei 120°C 30 Minuten eingebrannt. Es resultiert eine Trockenschichtdicke von ca. 45 µm Klarlack.

Als Vergleich dient eine Lackmischung, die unstabilisierte Mikropartikel (hergestellt ohne Lichtschutzmittelzusatz) enthält, aber sonst auf gleichem Weg die oben bereitet und appliziert wird.

Die Proben werden sowohl in einer beschleunigten Bewitterung (UVCON bzw. Xenon-Weatherometer der Fa. Atlas Corp.) wie auch in der Freibewitterung in Florida geprüft.

Die stabilisierten Proben weisen eine deutlich bessere Glanzhaltung und längere Rissfreiheit auf als die unstabilisierte Vergleichsprobe.

## Patentansprüche

1. Lichtstabilisierte Polymermikropartikel mit einem vernetzten Kern und einer Teilchengrössenverteilung von 0,01-20 µm, erhältlich durch Copolymerisation von
a) einer oder mehreren ethylenisch ungesättigten monomeren Verbindungen oder/und einem oder mehreren verschiedenen Monomeren aus der Gruppe der Polyalkohole, Polycarbonsäuren, Hydroxycarbonsäuren, Lactone, Aminocarbonsäuren, Aminoalkohole und Polyamine und
b) mindestens einer Epoxid-Verbindung, die mindestens eine weitere reaktive Gruppe enthält, wobei im wesentlichen nur letztere an der Copolymerisation teilnimmt, wodurch die erhaltenen Mikropartikel freie Epoxygruppen enthalten,
welche Mikropartikel 0,1-bis 30 Gew-%, bezogen auf die eingesetzten Monomeren, eines oder mehrerer Lichtschutzmittel(s) enthalten, und wobei mindestens ein Teil der Polymerisation der Monomeren in gegenwart des (der) Lichtschutzmittel(s) erfolgt.

2. Mikropartikel gemäss Anspruch 1, worin das (die) Lichtschutzmittel mindestens eine reaktive Gruppe aufweist (aufweisen), mit der es (sie) chemisch an das Polymer gebunden werden kann (können).

3. Mikropartikel gemäss Anspruch 2, wobei es sich bei der reaktiven Gruppe um eine Hydroxy-, Carboxy-, Ester-, Amid- oder Epoxy-Gruppe oder eine ethylenische Doppelbindung handelt.

4. Mikropartikel gemäss Anspruch 1, wobei man als Lichtschutzmittel mindestens eine Verbindung aus der Klasse der sterisch gehinderten Amine verwendet.

5. Mikropartikel gemäss Anspruch 4, wobei man als Lichtschutzmittel ein 2,2,6,6-Tetraalkylpiperidinderivat verwendet, welches in seinem Molekül mindestens eine Gruppe der Formel I 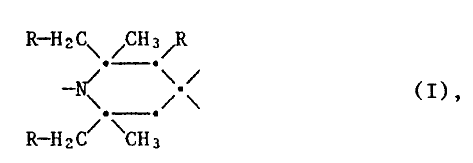 enthält, wobei R Wasserstoff oder Methyl ist.

6. Mikropartikel gemäss Anspruch 1, worin das Lichtschutzmittel ein UV-Absorber ist.

7. Mikropartikel gemäss Anspruch 1, worin als Lichtschutzmittel ein UV-Absorber und ein sterisch gehindertes Amin eingesetzt wird.

8. Mikropartikel gemäss Anspruch 6, worin der UV-Absorber der Klasse der 2-(2-Hydroxyphenyl)-benztriazole angehört.

9. Mikropartikel gemäss Anspruch 1, wobei es sich bei dem Polymer um ein Additionspolymer handelt.

10. Mikropartikel gemäss Anspruch 9, worin die Komponente a) mindestens eine ethylenisch ungesättigte Verbindung enthält und die Komponente b) ein Epoxid ist, das mindestens eine ethylenisch ungesättigte Gruppe enthält.

11. Mikropartikel gemäss Anspruch 1, die aus einem vernetzten Kern und daran anpolymerisierten, im wesentlichen linearen bis wenig verzweigten Polymerketten bestehen, wobei das (die) Lichtschutzmittel im Kern oder/und in den Polymerketten enthalten ist (sind).

12. Mikropartikel gemäss Anspruch 11, worin die freien Epoxygruppen im Kern, in den anpolymerisierten Polymerketten oder im Kern und in den Polymerketten vorhanden sind.

13. Verfahren zur Herstellung von lichtstabilisierten Polymermikropartikeln mit einem vernetzten Kern und einer Teilchengrössenverteilung von 0,01-20 µm, dadurch gekennzeichnet, dass man a) eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren, Lactone, Aminocarbonsäuren, Aminoalkohole und Polyamine mit b) mindestens einer Epoxid-Verbindung, die mindestens eine weitere reaktive Gruppe enthält, in Gegenwart von 0,1 bis 30 Gew.-%, bezogen auf die Monomeren, eines oder mehrerer Lichtschutzmittel(s) so copolymerisiert, dass im wesentlichen nur die genannte(n) weitere(n) reaktive(n) Gruppe(n) der Epoxid-Verbindung an der Polymerisation teilnehmen, wodurch die erhaltenen Mikropartikel freie Epoxygruppen enthalten, und dass der Kern des erhaltenen Polymeren vernetzt ist und mindestens ein Polymerisationsschritt in Gegenwart des (der) Lichtschutzmittel(s) erfolgt.

14. Verfahren nach Anspruch 13, dadurch gekennzeichnet, dass man
a₁) eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren und Lactone mit mindestens einer Epoxid-Verbindung, die mindestens eine weitere reaktive Gruppe enthält, vernetzend copolymerisiert, dass im wesentlichen nur die genannte(n) weitere(n) reaktive(n) Gruppe(n) der Epoxid-Verbindung an der Polymerisation teilnehmen, wodurch freie Epoxygruppen erhalten bleiben,
b₁) eine oder mehrere der unter a₁) genannten Monomeren zu einem im wesentlichen linearen bis verzweigten Polymeren polymerisiert, wobei diese Polymerisation auch in Abwesenheit der Epoxidverbindung erfolgen kann, und
c₁) das gemäss b₁) erhaltene Polymer an das gemäss a₁) erhaltene Polymer anpolymerisiert (aufgraftet),
wobei die Polymerisation gemäss a₁) oder gemäss b₁) oder beide Polymerisationen in Gegenwart eines oder mehrerer Lichtschutzmittel durchgeführt werden und wobei die Lichtschutzmittel in beiden Polymerisationsschritten gleich oder verschieden sein können und die Gesamtmenge an Lichtschutzmittel 0,1 bis 30 Gew.-%, bezogen auf die Monomeren in beiden Polymerisationsschritten, beträgt, und wobei die Polymerisation a₁) ganz oder teilweise in Gegenwart des gemäss b₁) gebildeten Polymeren erfolgen kann.

15. Verfahren nach Anspruch 13, dadurch gekennzeichnet, dass man
a₁) eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren und Lactone vernetzend polymerisiert,
b₁) eine oder mehrere der unter a₁) genannten Monomeren mit mindestens einer Epoxid-Verbindung, die mindestens eine weitere reaktive Gruppe enthält, zu einem im wesentlichen linearen bis wenig verzweigten Polymeren so copolymerisiert, dass im wesentlichen nur die genannte(n) weitere(n) reaktive(n) Gruppe(n) der Epoxid-Verbindung an der Polymerisation teilnehmen, wodurch freie Epoxygruppen erhalten bleiben, und
c₁) das gemäss b₁) erhaltene Polymer an das gemäss a₁) erhaltene Polymer anpolymerisiert (aufgraftet),
wobei die Polymerisation gemäss a₁) oder gemäss b₁) oder beide Polymerisationen in Gegenwart eines oder mehrerer Lichtschutzmittel durchgeführt werden und wobei die Lichtschutzmittel in beiden Polymerisationsschritten gleich oder verschieden sein können und die Gesamtmenge an Lichtschutzmittel 0,1 bis 30 Gew.-%, bezogen auf die Monomeren in beiden Polymerisationsschritten, beträgt, und wobei die Polymerisation a₁) ganz oder teilweise in Gegenwart des gemäss b₁) gebildeten Polymeren erfolgen kann.

16. Dispersion, enthaltend lichtstabilisierte Polymermikropartikel gemäss einem der Ansprüche 1 bis 12 und mindestens ein Lösungsmittel, in dem die Polymermikropartikel im wesentlichen unlöslich sind.

17. Dispersion gemäss Anspruch 16, die als Lösungsmittel Wasser oder einen aliphatischen, cycloaliphatischen oder aromatischen Kohlenwasserstoff oder Mischungen dieser Lösungsmittel enthält.

18. Verwendung der in den Ansprüchen 1 bis 15 beschriebenen bzw. erhaltenen Polymermikropartikel oder der Dispersionen gemäss Anspruch 16 oder 17 als Bestandteil von Beschichtungszusammensetzungen.

19. Beschichtungszusammensetzung, in der das filmbildende Material
a) 1 bis 95 Vol-% einer dispersen Phase, die Mikropartikel gemäss Anspruch 1 enthält, und
b) 99 bis 5 Vol-% einer flüssigen kontinuierlichen Phase mit einer Viskosität von 10 bis 3000 mPa.s (0,1 bis 30 Poise) bei Raumtemperatur, die dazu fähig ist, mit der dispersen Phase in ein filmbildendes Polymer zu härten, enthält, wobei das Gesamtvolumen von a) und b) 100 % beträgt und die disperse Phase an der Lackhärtung teilnimmt.

20. Beschichtungszusammensetzung gemäss Anspruch 19, in der das filmbildende Material a) 5-85 Vol-% der dispersen Phase, die mindestens 50 Vol-% Mikropartikel nach Anspruch 1 enthält, und b) 95-15 Vol-% der flüssigen kontinuierlichen Phase, die bei Raumtemperatur eine Viskosität von 0,1 bis 20 Poise aufweist, enthält.

21. Beschichtungszusammensetzung gemäss Anspruch 20, worin die kontinuierliche Phase b) ebenfalls ein oder mehrere Lichtschutzmittel enthält.

22. Beschichtungszusammensetzung gemäss Anspruch 19, worin die flüssige kontinuierliche Phase b) ein duroplastisches Harz enthält.

23. Beschichtungszusammensetzung gemäss Anspruch 22, worin es sich bei dem Harz um ein vernetzbares Acrylharz, Polyester/Alkyd-Harz oder Polyurethanharz handelt, das gegebenenfalls mit Aminoplasten, Polyisocyanat oder Polyepoxiden vernetzt ist.

24. Beschichtungszusammensetzung gemäss Anspruch 19, worin die flüssige kontinuierliche Phase b) einen Reaktivverdünner enthält, der selbst nicht härtbar ist, jedoch reaktive Gruppen besitzt, mittels derer er an der Härtung des filmbildenden Materials teilnehmen kann.

## Claims

1. Light-stabilised polymer microparticles having a crosslinked core and a particle size distribution of 0.01-20 µm, obtainable by copolymerisation of a) one or more ethylenically unsaturated monomeric compounds or/and one or more different monomers selected from the group comprising polyalcohols, polycarboxylic acids, hydroxycarboxylic acids, lactones, aminocarboxylic acids, aminoalcohols and polyamines, and b) at least one epoxide compound, which contains at least one further reactive group, essentially only the latter participating in the copolymerisation, so that the resulting microparticles contain free epoxy groups, which microparticles contain 0.1 to 30% by weight, relative to the monomers employed, of one or more light stabiliser(s), and at least part of the polymerisation of the monomers being carried out in the presence of the light stabiliser(s).

2. Microparticles according to claim 1, wherein the light stabiliser(s) has or have at least one reactive group for chemical bonding to the polymer.

3. Microparticles according to claim 2, wherein the reactive group is a hydroxyl, carboxyl, ester, amide or epoxy group or an ethylenic double bond.

4. Microparticles according to claim 1, wherein at least one compound from the group comprising sterically hindered amines is used as the light stabiliser.

5. Microparticles according to claim 4, wherein the light stabilizer used is a 2,2,6,6-tetraalkylpiperidine derivative which contains in its molecule at least one group of the formula I 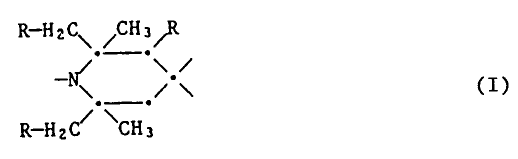 in which R is hydrogen or methyl.

6. Microparticles according to claim 1, wherein the light stabiliser is a UV absorber.

7. Microparticles according to claim 1, wherein a UV absorber and a sterically hindered amine are used as the light stabilisers.

8. Microparticles according to claim 6, wherein the UV absorber belongs to the class of 2-(2-hydroxyphenyl)-benzotriazoles.

9. Microparticles according to claim 1, wherein the polymer is an addition polymer.

10. Microparticles according to claim 9, wherein component a) contains at least one ethylenically unsaturated compound and component b) is an epoxide which contains at least one ethylenically unsaturated group.

11. Microparticles according to claim 1, which comprise a crosslinked core and essentially linear to slightly branched polymer chains polymerised thereon, the light stabiliser(s) being contained in the core or/and in the polymer chains.

12. Microparticles according to claim 11, wherein the free epoxy groups are in the core, in the polymer chains polymerised thereon or in the core and in the polymer chains.

13. A process for the preparation of light-stabilised polymer microparticles having a crosslinked core and a particle size distribution of 0.01-20 µm, which comprises a) copolymerising one or more different ethylenically monounsaturated or polyunsaturated monomeric compounds or/and one or more different monomers selected from the group comprising polyalcohols, polycarboxylic acids, hydroxycarboxylic acids, lactones, aminocarboxylic acids, aminoalcohols and polyamines with b) at least one epoxide compound, which contains at least one further reactive group, in the presence of 0.1 to 30% by weight, relative to the monomers, of one or more light stabilisers(s) in such a way that essentially only the said further reactive group(s) of the epoxide compound participate(s) in the polymerisation, so that the resulting microparticles contain free epoxy groups, and the core of the resulting polymer being crosslinked, and at least one polymerization step taking place in the presence of the light stabiliser(s).

14. A process according to claim 13, which comprises
a₁) copolymerising one or more different ethylenically monounsaturated or polyunsaturated monomeric compounds or/and one or more different monomers selected from the group comprising polyalcohols, polycarboxylic acids, hydroxycarboxylic acids and lactones with at least one epoxide compound, which contains at least one further reactive group, with crosslinking in such a way that essentially only the said further reactive group(s) of the epoxide compound participate(s) in the polymerisation, so that free epoxy groups remain,
b₁) polymerising one or more of the monomers mentioned under a₁) to give an essentially linear to branched polymer, which polymerisation can also take place in the absence of the epoxide compound, and
c₁) polymerising (grafting) the polymer obtained according to b₁) onto the polymer obtained according to a₁),
the polymerisation according to a₁) or according to b₁) or both polymerisations being carried out in the presence of one or more light stabilisers, it being possible for the light stabilisers in the two polymerisation steps to be identical or different, and the total quantity of light stabiliser being 0.1 to 30% by weight, relative to the monomers in both polymerisation steps, and it being possible for the polymerisation a₁) to take place wholly or partially in the presence of the polymer formed according to b₁).

15. A process according to claim 13, which comprises
a₁) polymerising one or more different ethylenically monounsaturated or polyunsaturated monomeric compounds or/and one or more different monomers selected from the group comprising polyalcohols, polycarboxylic acids, hydroxycarboxylic acids and lactones with crosslinking,
b₁) copolymerising one or more of the monomers mentioned under a₁) with at least one epoxide compound, which contains at least one further reactive group, to give an essentially linear to slightly branched polymer in such a way that essentially only the said further reactive group(s) of the epoxide compound participate(s) in the polymerisation, so that free epoxy groups remain, and
c₁) polymerising (grafting) the polymer obtained according to b₁) onto the polymer obtained according to a₁),
the polymerisation according to a₁) or according to b₁) or both polymerisations being carried out in the presence of one or more light stabilisers, it being possible for the light stabilisers in the two polymerisation steps to be identical or different and the total quantity of light stabiliser being 0.1 to 30% by weight, relative to the monomers in both polymerisation steps, and it being possible for the polymerisation a₁) to take place wholly or partially in the presence of the polymer formed according to b₁).

16. A dispersion, containing light-stabilised polymer microparticles according to any one of claims 1 to 12 and at least one solvent in which the polymer microparticles are essentially insoluble.

17. A dispersion according to claim 16 which, as the solvent, contains water or an aliphatic, cycloaliphatic or aromatic hydrocarbon or mixtures of these solvents.

18. The use of the polymer microparticles described in or obtained according to any one of claims 1 to 15 or of the dispersions according to either of claims 16 and 17 as a constituent of coating compositions.

19. A coating composition, wherein the film-forming material comprises
a) 1 to 95% by volume of a disperse phase which contains microparticles according to claim 1, and
b) 99 to 5% by volume of a liquid continuous phase which has a viscosity of 10 to 3000 mPa.s (0.1 to 30 poise) at room temperature and is capable of curing together with the disperse phase to give a film-forming polymer, the total volume of a) and b) being 100% and the disperse phase participating in curing the coating.

20. A coating composition according to claim 19, wherein the film-forming material comprises a) 5-85% by volume of the disperse phase which contains at least 50% by volume of microparticles according to claim 1, and b) 95-15% by volume of the liquid continuous phase which has a viscosity of 0.1 to 20 poise at room temperature.

21. A coating composition according to claim 20, wherein the continuous phase b) also contains one or more light stabilisers.

22. A coating composition according to claim 19, wherein the liquid continuous phase b) contains a thermosetting resin.

23. A coating composition according to claim 22, wherein the resin is a crosslinkable acrylic resin, polyester/alkyd resin or polyurethane resin, which may be crosslinked with amino resins, polyisocyanate or polyepoxides.

24. A coating composition according to claim 19, wherein the liquid continuous phase b) contains a reactive diluent which is itself not curable but contains reactive groups, by means of which it can participate in the curing of the film-forming material.

## Revendications

1. Microparticules de polymère stabilisées à la lumière ayant un noyau réticulé et une granulométrie de 0,01-20 µm, qui peuvent être obtenues par copolymérisation
a) d'un ou plusieurs composés monomères à insaturation éthylénique ou/et d'un ou plusieurs monomères différents du groupe des polyalcools, acides polycarboxyliques, acides hydroxycarboxyliques, lactones, acides aminocarboxyliques, aminoalcools et polyamines, et
b) d'au moins un composé époxy contenant au moins un autre groupe réactif, seul ce dernier participant en substance à la copolymérisation, ce qui fait que les microparticules obtenues contiennent des groupes époxy libres,
ces microparticules contenant de 0,1 à 30 % en poids, par rapport aux monomères introduits, d'un ou plusieurs stabilisants à la lumière, et au moins une partie de la polymérisation des monomères se faisant en présence du ou des stabilisants à la lumière.

2. Microparticules selon la revendication 1, dans lesquelles le ou les stabilisants à la lumière contiennent au moins un groupe réactif à l'aide duquel ils peuvent se lier chimiquement au polymère.

3. Microparticules selon la revendication 2, dans lesquelles le groupe réactif est un groupe hydroxy, carboxy, ester, amide ou époxy, ou une double liaison éthylénique.

4. Microparticules selon la revendication 1, pour lesquelles on utilise comme stabilisant à la lumière au moins un composé de la classe des amines stériquement encombrées.

5. Microparticules selon la revendication 4, pour lesquelles on utilise comme stabilisant à la lumière un dérivé de 2,2,6,6-tétralkylpipéridine dont la molécule contient au moins un groupe de formule I 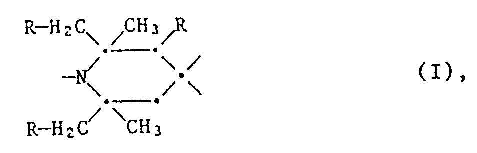 dans laquelle R est l'hydrogène ou un méthyle.

6. Microparticules selon la revendication 1, dans lesquelles le stabilisant à la lumière est un absorbant d'UV.

7. Microparticules selon la revendication 1, dans lesquelles on utilise comme stabilisant à la lumière un absorbant d'UV et une amine stériquement encombrée.

8. Microparticules selon la revendication 6, dans lesquelles l'absorbant d'UV appartient à la classe des 2-(2-hydroxyphényl)benzotriazoles.

9. Microparticules selon la revendication 1, dans lesquelles le polymère est un polymère d'addition.

10. Microparticules selon la revendication 9, dans lesquelles le constituant a) contient au moins un composé à insaturation éthylénique et le constituant b) est un époxyde qui contient au moins un groupe à insaturation éthylénique.

11. Microparticules selon la revendication 1, qui sont constituées d'un noyau réticulé et de chaînes polymères essentiellement linéaires à peu ramifiées qui y sont copolymérisées, le ou les stabilisants à la lumière étant contenus dans le noyau ou/et dans les chaînes polymères.

12. Microparticules selon la revendication 11, dans lesquelles les groupes époxy libres sont présents dans le noyau, dans les chaînes polymères copolymérisées ou dans le noyau et dans les chaînes polymères.

13. Procédé de préparation de microparticules de polymère stabilisées à la lumière ayant un noyau réticulé et une granulométrie de 0,01-20 µm, caractérisé en ce qu'on copolymérise a) un ou plusieurs composés monomères différents à une ou plusieurs insaturations éthyléniques ou/et un ou plusieurs monomères différents du groupe des polyalcools, acides polycarboxyliques, acides hydroxycarboxyliques, lactones, acides aminocarboxyliques, aminoalcools et polyamines avec b) au moins un composé époxy qui contient au moins un autre groupe réactif, en présence de 0,1 à 30 % en poids, par rapport aux monomères, d'un ou plusieurs stabilisants à la lumière, de façon qu'essentiellement seul(s) le ou lesdits autres groupes réactifs du composé époxy participent à la polymérisation, ce qui fait que les microparticules obtenues contiennent des groupes époxy libres, que le noyau du polymère obtenu soit réticulé et qu'au moins une étape de la polymérisation se fasse en présence du ou des stabilisants à la lumière.

14. Procédé selon la revendication 13, caractérisé en ce que
a₁) on copolymérise dans des conditions de réticulation un ou plusieurs composés monomères différents à une ou plusieurs insaturations éthyléniques ou/et un ou plusieurs monomères différents du groupe des polyalcools, acides polycarboxyliques, acides hydroxycarboxyliques et lactones avec au moins un composé époxy qui contient au moins un autre groupe réactif de façon qu'essentiellement seul(s) le ou lesdits autres groupes réactifs du composé époxy participent à la polymérisation, ce qui fait qu'il reste des groupes époxy libres intacts,
b₁) on polymérise un ou plusieurs des monomères cités sous a₁) en un polymère essentiellement linéaire à ramifié, cette polymérisation pouvant aussi se produire en l'absence du composé époxy, et
c₁) on polymérise (greffe) le polymère obtenu selon b₁) sur le polymère obtenu selon a₁),
dans des conditions où la polymérisation selon a₁) ou selon b₁) ou les deux polymérisations sont effectuées en présence d'un ou plusieurs stabilisants à la lumière, les stabilisants à la lumière pouvant être identiques ou différents dans les deux étapes de polymérisation et la quantité totale de stabilisant à la lumière étant de 0,1 à 30 % en poids par rapport aux monomères dans les deux étapes de polymérisation, et où la polymérisation a₁) peut s'effectuer entièrement ou en partie en présence du polymère formé selon b₁).

15. Procédé selon la revendication 13, caractérisé en ce que
a₁) on polymérise dans des conditions de réticulation un ou plusieurs composés monomères différents à une ou plusieurs insaturations éthyléniques ou/et un ou plusieurs monomères différents du groupe des polyalcools, acides polycarboxyliques, acides hydroxycarboxyliques et lactones,
b₁) on copolymérise un ou plusieurs des monomères cités sous a₁) avec au moins un composé époxy qui contient au moins un autre groupe réactif en un polymère essentiellement linéaire à peu ramifié, de façon qu'essentiellement seul(s) le ou lesdits autres groupes réactifs du composé époxy participent à la polymérisation, ce qui fait qu'il reste des groupes époxy libres intacts, et
c₁) on polymérise (greffe) le polymère obtenu selon b₁) sur le polymère obtenu selon a₁),
dans des conditions où la polymérisation selon a₁) ou selon b₁) ou les deux polymérisations s'effectuent en présence d'un ou plusieurs stabilisants à la lumière, les stabilisants à la lumière pouvant être identiques ou différents dans les deux étapes de polymérisation et la quantité totale de stabilisant à la lumière étant de 0,1 à 30 % en poids par rapport aux monomères dans les deux étapes de polymérisation, et où la polymérisation a₁) peut s'effectuer entièrement ou partiellement en présence du polymère formé selon b₁).

16. Dispersion contenant des microparticules de polymère stabilisées à la lumière selon l'une des revendications 1 à 12 et au moins un solvant dans lequel les microparticules de polymère sont essentiellement insolubles.

17. Dispersion selon la revendication 16 qui contient comme solvant de l'eau ou un hydrocarbure aliphatique, cycloaliphatique ou aromatique ou des mélanges de ces solvants.

18. Utilisation des microparticules de polymère décrites ou obtenues dans les revendications 1 à 15 ou des dispersions selon la revendication 16 ou 17, comme constituant de compositions de revêtement.

19. Composition de revêtement dans laquelle la matière filmogène contient
a) de 1 à 95 % en volume d'une phase dispersée qui contient des microparticules selon la revendication 1, et
b) de 99 à 5 % en volume d'une phase liquide continue ayant une viscosité de 10 à 3000 mPa.s (0,1 à 30 poises) à la température ambiante, et qui est capable de se durcir avec la phase dispersée pour former un polymère filmogène, le volume total de a) et de b) étant de 100 % et la phase dispersée participant au durcissement de la peinture.

20. Composition de revêtement selon la revendication 19, dans laquelle la matière filmogène contient a) 5-85 % en volume de la phase dispersée qui contient au moins 50 % en volume de microparticules selon la revendication 1, et b) 95-15 % en volume de la phase liquide continue dont la viscosité à la température ambiante est de 0,1 à 20 poises.

21. Composition de revêtement selon la revendication 20, dans laquelle la phase continue b) contient aussi un ou plusieurs stabilisants à la lumière.

22. Composition de revêtement selon la revendication 19, dans laquelle la phase liquide continue b) contient une résine thermodurcissable.

23. Composition de revêtement selon la revendication 22, dans laquelle la résine est une résine acrylique réticulable, une résine de polyester/alkyde réticulable ou une résine de polyuréthanne réticulable, qui est éventuellement réticulée avec des résines amino, un polyisocyanate ou des polyépoxydes.

24. Composition de revêtement selon la revendication 19, dans laquelle la phase liquide continue b) contient un diluant réactif qui n'est lui-même pas durcissable mais qui possède des groupes réactifs au moyen desquels il peut participer au durcissement de la matière filmogène.
